# EUROPÄISCHE PATENTSCHRIFT

(11) **EP 3 626 540 B1**
(45) Veröffentlichungstag und Bekanntmachung des Hinweises auf die Patenterteilung: **09.12.2020**
(21) Anmeldenummer: 19197227.2
(22) Anmeldetag: 13.09.2019
(51) Int. Cl.: B60R 11/00

(54) **AUFKLAPPBARER EINRICHTUNGSGEGENSTAND FÜR LASTKRAFTWAGENKABINE**
COLLAPSIBLE DEVICE FOR TRUCK CABINS
ARTICLE D'AMEUBLEMENT PLIABLE POUR POIDS LOURD

(30) Priorität: 19.09.2018 DE 102018122946; 21.08.2019 DE 102019122547
(43) Veröffentlichungstag der Anmeldung: 25.03.2020
(73) Patentinhaber: GRAMMER AG, 92289 Ursensollen (DE)
(72) Erfinder: Ott, Richard, 92245 Kümmersbruck (DE); Fischer, Johan, 92286 Rieden (DE); Hegen, Martin, 92421 Schwandorf (DE)
(74) Vertreter: Hannke, Christian

(56) Entgegenhaltungen:
- WO-A1-2006/068385
- WO-A1-2018/029410
- US-A1- 2005 236 527

## Beschreibung

Die Erfindung betrifft einen Lastkraftwagenkabineneinrichtungsgegenstand, welcher in einen Innenraum, insbesondere einen Armaturenbereich oder einen Bereich oberhalb der Windschutzscheibe der Lastkraftwagenkabine integriert und fest in diesen eingebaut ist, bestehend aus einem Aufnahmeelement und einem damit durch eine Führungseinrichtung verbundenen ersten Anteil und zweiten Anteil, gemäß dem Oberbegriff des Patentanspruches 1.

Der zur Verfügung stehende Platz im Innenraum einer Nutzfahrzeugkabine ist begrenzt und wird zum Großteil von Instrumenten, Anzeigen und weiteren Systemen beansprucht, die zum Führen des entsprechenden Nutzfahrzeuges relevant sind. Des Weiteren müssen insbesondere in Lastkraftwagen (LKWs), welche für den Fernverkehr eingesetzt werden, Einrichtungen für einen Fahrzeugführer zur Verfügung stehen, die von diesem vorrangig während Ruhezeiten des LKWs verwendet werden. Diese Einrichtungen umfassen beispielsweise Staufächer sowie Sitz- und Schlafgelegenheiten oder weitere Anzeigen.

Aus der Fülle der verschiedenen Elemente, welche im Innenraum der Nutzfahrzeugkabine angeordnet werden müssen, ergibt sich das Problem, dass der Platz für weitere Anzeigen und Einrichtungen in günstiger Position für den Fahrzeugführer bzw. einen Beifahrer kaum mehr vorhanden ist. Dies betrifft vordergründig Anzeigen und Einrichtungen, welche nicht dringend für den Betrieb des Nutzfahrzeuges benötigt werden und/oder lediglich zweitweise verwendet werden. Die US2005/0236527 A1 offenbart einen Lastkraftwagenkabineneinrichtungsgegenstand gemäß dem Oberbegriff des Anspruchs 1.

Es ist daher Aufgabe der vorliegenden Erfindung, einen Lastkraftwageneinrichtungsgegenstand zur Verfügung zu stellen, welcher in einem eingeklappten bzw. eingefahrenen Zustand platzsparend an einer günstigen Position im Innenraum der Nutzfahrzeugkabine angeordnet werden kann und bei Bedarf in einen ausgeklappten bzw. ausgefahrenen Zustand überführt werden kann, um verwendet zu werden.

Die Aufgabe der Erfindung wird gelöst von einem Lastkraftwagenkabineneinrichtungsgegenstand mit den Merkmalen des Anspruchs 1.

Die Lastkraftwagenkabine bzw. der Lastkraftwagenkabineneinrichtungsgegenstand erstrecken sich somit entlang einer Höhenachse Z, einer Breitenachse Y und einer Längenachse X, wobei den jeweiligen Achsen jeweils zwei Richtungen zuzuordnen sind. So umfasst die Höhenachse Z die Richtungen Z1 (nach oben) und Z2 (nach unten). Die Breitenachse Y umfasst die Richtungen Y1 (nach rechts) und Y2 (nach links). Die Längenachse X umfasst die Richtungen X1 (nach vorne) und X2 (nach hinten).

Im Sinne der Erfindung entspricht die Längenachse X einer Fahrtrichtung (vorwärts bzw. rückwärts) eines entsprechenden Lastkraftwagens. Die Längenachse X erstreckt sich demnach im Wesentlichen zwischen einer Frontscheibe (vorne X1) der Lastkraftwagenkabine hin zu einer Rückwand (hinten X2) der Lastkraftwagenkabine. Die Breitenachse Y erstreckt sich im Wesentlichen zwischen einer Fahrertür (Y2 links) zu einer Beifahrertür (Y1 rechts) der Lastkraftwagenkabine. Die Höhenachse Z erstreckt sich im Wesentlichen zwischen einem Lastkraftwagenkabinenboden (Z2 unten) zu einem Lastkraftwagenkabinenhimmel (Z1 oben).

Der verwendete Ausdruck "im Wesentlichen" soll dahingehend auszulegen sein, dass auch geringfügige Toleranzabweichungen mit beansprucht werden sollen. So kann die Abweichung einen Winkel von bevorzugt kleiner 10° weiter bevorzugt kleiner 7,5°, noch weiter bevorzugt kleiner 5° betragen. Dies gilt auch für die im Folgenden verwendeten Ausdrücke "im Wesentlichen".

Erfindungsgemäß handelt es sich bei dem zugeklappten Zustand um einen Lagerzustand und bei dem aufgeklappten Zustand um einen Gebrauchszustand des Lastkraftwagenkabineneinrichtungsgegenstands bzw. des ersten und des zweiten Anteils.

Die Haupterstreckungsebene des ersten Anteils und des zweiten Anteils erstreckt sich in dem zugeklappten Zustand bevorzugt im Wesentlichen entlang der Längenachse X und der Höhenachse Z. In dem aufgeklappten Zustand erstreckt sich die Haupterstreckungsebene des ersten Anteils und des zweiten Anteils bevorzugt im Wesentlichen in der Breitenachse Y und der Höhenachse Z. Demzufolge ist es besonders vorteilhaft, wenn der erste Anteil und der zweite Anteil in dem eingeklappten Zustand bezogen auf ihre Haupterstreckungsebene parallel zu der Längenachse der Lastkraftwagenkabine angeordnet ist, um einen geringen Platzbedarf aufzuweisen. Im Gegensatz dazu kann in dem aufgeklappten Zustand, in welchem der erste und der zweite Anteil bezogen auf ihre Haupterstreckungsebene senkrecht zu der Längenachse der Lastkraftwagenkabine angeordnet sind, eine möglichst große Nutzfläche gewährleistet werden. Bevorzugt sind eine erste Nutzfläche (parallel zu der Haupterstreckungsebene) des ersten Anteils und eine zweite Nutzfläche (parallel zu der Haupterstreckungsebene) des zweiten Anteils in dem zugeklappten Zustand einander zugewandt angeordnet, wobei in dem aufgeklappten Zustand die erste Nutzfläche des ersten Anteils und die zweite Nutzfläche des zweiten Anteils einander abgewandt angeordnet sind. Bevorzugt soll unter einer Nutzfläche diejenige Fläche des ersten und zweiten Anteils verstanden werden, welche dem Einrichtungsgegenstand seine Funktion zukommen lässt. Weiter bevorzugt sind die erste und zweite Nutzfläche in dem aufgeklappten Zustand entlang der Längenrichtung X nach hinten (Längenrichtung X2) zeigend angeordnet.

Bevorzugt umfassen der erste Anteil und/oder der zweite Anteil eine Anzeigeeinrichtung, insbesondere einen Bildschirm, wobei es sich beispielsweise um einen LCD-, einen LED oder einen Touchbildschirm handeln kann. Dabei können der erste und/oder der zweite Anteil als Bildschirm ausgebildet sein oder ein Bildschirm kann in oder an dem ersten Anteil und/oder dem zweiten Anteil angeordnet sein, bevorzugt an der ersten und der zweiten Nutzfläche. Vorteilhaft können ein Bildschirm des ersten Anteils und ein Bildschirm des zweiten Anteils als ein großer Bildschirm oder unabhängig voneinander verwendet werden. Es ist ebenfalls denkbar, dass der erste und/oder der zweite Anteil eine Kamera aufweisen, wodurch Videotelefonie oder die Verwendung des Bildschirms als Spiegel möglich ist.

Weiterhin kann der erste Anteil und/oder der zweite Anteil bevorzugt mindestens ein z Aufbewahrungselement aufweisen, welches beispielsweise dazu dienen kann, eine Zahnbürste oder andere Hygieneartikel darin aufzubewahren. Bevorzugt ist das mindestens eine Aufbewahrungsmittel an der ersten und/oder zweiten Nutzfläche angeordnet.

Ferner ist es möglich, dass sich eine Breite des ersten Anteils, welche sich im zugeklappten Zustand entlang der Breitenachse erstreckt, von einer Breite des zweiten Anteils, welche sich im zugeklappten Zustand entlang der Breitenachse erstreckt, unterscheidet. Dies kann beispielsweise vorteilhaft sein, um ein optionales Aufbewahrungsmittel an einem der Anteile zu vergrößern.

Der Lastkraftwagenkabineneinrichtungsgegenstand ist erfindungsgemäß im Innerraum der Lastkraftwagen integriert, wobei das Aufnahmeelement und der erste und zweite Anteil im zugeklappten Zustand in harmonischer Art und Weise in den Innenraum, insbesondere in den Armaturenbereich oder den Bereich oberhalb der Windschutzscheibe, eingebunden und einem entsprechenden Oberflächenverlauf angepasst sind. Ferner ist der Lastkraftwagenkabineneinrichtungsgegenstand fest in den Innenraum der Lastkraftwagenkabine eingebaut, wobei das Aufnahmeelement fest und starr im Innenraum eingebaut ist und der erste Anteil und der zweite Anteil mittels der Führungseinrichtung beweglich mit dem Aufnahmeelement verbunden sind. Erfindungsgemäß handelt es sich bei einer festen Verbindung um eine dauerhafte Verbindung, wie eine Schweißverbindung, eine Klebeverbindung, eine Steckverbindung, eine Nietenverbindung eine Schraubverbindung oder dergleichen.

Gemäß der Erfindung weist die Führungseinrichtung ein erstes Führungselement zum Durchführen einer ersten Translationsbewegung des ersten Anteils relativ zu dem Aufnahmeelement entlang der Längenachse der Lastkraftwagenkabine, ein zweites Führungselement zum Durchführen einer zweiten Translationsbewegung des zweiten Anteils relativ zu dem Aufnahmeelement entlang der Längenachse der Lastkraftwagenkabine, ein mit dem ersten Führungselement wechselwirkendes erstes Gleitelement und ein mit dem zweiten Führungselement wechselwirkendes zweites Gleitelement auf. Dabei handelt es sich bei der ersten und der zweiten Translationsbewegung um eine reine Translationsbewegung entlang der Längenachse der Lastkraftwagenkabine. Bevorzugt ist die erste Translationsbewegung und die zweite Translationsbewegung entlang der Längenachse X nach vorne (Richtung X1) und nach hinten (Richtung X2) durchführbar. Weiter bevorzugt erfolgt die erste Translationsbewegung des ersten Gleitelements und die zweite Translationsbewegung des zweiten Gleitelements entlang der Längenachse X nach hinten (Richtung X2), falls der erste Anteil und der zweite Anteil von dem zugeklappten Zustand in den aufgeklappten Zustand überführt wird und die erste Translationsbewegung des ersten Gleitelements und die zweite Translationsbewegung des zweiten Gleitelements entlang der Längenachse X nach vorne (Richtung X1) erfolgt, falls der erste Anteil und der zweite Anteil von dem aufgeklappten Zustand in den zugeklappten Zustand überführt wird.

Gemäß einer bevorzugten Ausführungsform sind das erste und das zweite Führungselement länglich ausgestaltet und erstrecken sich im Wesentlichen parallel zueinander entlang der Längenachse der Lastkraftwagenkabine an dem Aufnahmeelement. Bevorzugt sind das erste und das zweite Führungselement als Nut, insbesondere als T-Nut, ausgestaltet, die sich zumindest teilweise innerhalb des Aufnahmeelementes erstreckt. Die Anordnung des ersten Führungselements und des zweiten Führungselements an dem Aufnahmeelement entlang der Höhenachse Z ist variabel, bevorzugt sind die Führungselemente an einem oberen Abschnitt oder einem unteren Abschnitt des Aufnahmeelements bezogen auf die Höhenachse Z angeordnet.

Gemäß einer bevorzugten Ausführungsform ist das erste Gleitelement fest mit dem ersten Anteil und das zweite Gleitelement fest mit dem zweiten Anteil verbunden, wobei das erste Gleitelement zumindest teilweise innerhalb des ersten Führungselements und das zweite Gleitelement zumindest teilweise innerhalb des zweiten Führungselements angeordnet ist und wobei das erste Gleitelement entlang des ersten Führungselements und das zweite Gleitelement entlang des zweiten Führungselements entlang der Längenachse der Lastkraftwagenkabine bewegbar ist. Bevorzugt sind das erste Gleitelement und das zweite Gleitelement entlang der Längenachse X nach vorne (Richtung X1) und nach hinten (Richtung X2) bewegbar. Durch die Führungselemente sind das erste und das zweite Gleitelement und entsprechend der erste und der zweite Anteil geführt. Bevorzugt sind das erste Gleitelement und das zweite Gleitelement wechselwirkend mit dem ersten Führungselement bzw. dem zweiten Führungselement ausgebildet, wobei das erste Gleitelement komplementär zu dem ersten Führungselement und das zweite Gleitelement komplementär zu dem zweiten Führungselement ausgebildet ist. Beispielsweise können das erste Gleitelement und das zweite Gleitelement als Nutenstein, insbesondere als T-Nutenstein ausgebildet sein, falls das erste und das zweite Führungselement entsprechend als Nut, insbesondere als T-Nut, ausgestaltet sind.

Gemäß einer bevorzugten Ausführungsform weist die Gelenkeinrichtung ein fest mit dem ersten Anteil verbundenes erstes Scharnier zum Durchführen einer ersten Rotationsbewegung des ersten Anteils relativ zu dem Aufnahmeelement und ein fest mit dem zweiten Anteil verbundenes zweites Scharnier zum Durchführen einer zweiten Rotationsbewegung des zweiten Anteils relativ zu dem Aufnahmeelement auf. Die Anordnung des ersten Scharniers und des zweiten Scharniers an dem ersten Anteil bzw. dem zweiten Anteil entlang der Höhenachse Z ist variabel. Die Position des ersten und zweiten Scharniers entlang der Höhenachse richtet sich bevorzugt nach der Anordnung des ersten und zweiten Führungselements entlang der Höhenachse Z. Bevorzugt handelt es sich bei der ersten und der zweiten Rotationsbewegung um eine reine Rotationsbewegung. Demnach erfolgt der Übergang von dem zugeklappten Zustand in den aufgeklappten Zustand durch die erste und zweite Translationsbewegung des ersten und zweiten Anteils gefolgt von der ersten und zweiten Rotationsbewegung des ersten und zweiten Anteils, wobei der Übergang von dem aufgeklappten Zustand in den zugeklappten Zustand umgekehrt erfolgt. Bevorzugt handelt es sich bei der ersten und der zweiten Rotationsbewegung um eine Rotation um 10° bis 110°, bevorzugt um 40° bis 100°, weiter bevorzugt um 70° bis 95° und besonders bevorzugt um 90°. Die erste Rotationsbewegung und die zweite Rotationsbewegung sind gegenläufig.

Gemäß einer bevorzugten Ausführungsform ist das erste Scharnier fest mit dem ersten Gleitelement und das zweite Scharnier fest mit dem zweiten Gleitelement verbunden. Auf diese Weise sind der erste Anteil und der zweite Anteil fest mit dem Aufnahmeelement verbunden und gegenüber diesem bewegbar angeordnet.

Gemäß einer bevorzugten Ausführungsform weist das erste Scharnier eine erste Drehachse und das zweite Scharnier eine zweite Drehachse auf, wobei die erste und die zweite Drehachse im Wesentlichen senkrecht zu der Längenachse der Lastkraftwagenkabine angeordnet sind. Bevorzugt sind die erste Drehachse und die zweite Drehachse parallel zur der Höhenachse Z der Lastkraftwagenkabine angeordnet. Die erste und die zweite Drehachse gewährleisten die erste bzw. die zweite Rotationsbewegung des ersten bzw. des zweiten Anteils und somit den Übergang von dem zugeklappten Zustand in den aufgeklappten Zustand. Bevorzugt sind die erste Drehachse und die zweite Drehachse zur Durchführung der Rotationsbewegung außerhalb des Aufnahmeelements angeordnet.

Weiter bevorzugt sind das erste Scharnier und das zweite Scharnier beispielsweise als Feder beaufschlagtes und/oder Drehmomentscharnier ausgebildet, wodurch die erste Rotationsbewegung des ersten Anteils und die zweite Rotationsbewegung des zweiten Anteils automatisiert erfolgen kann.

Gemäß einer bevorzugten Ausführungsform sind der erste Anteil und der zweite Anteil in dem eingeklappten Zustand zumindest teilweise innerhalb des Aufnahmeelements und in dem ausgeklappten Zustand vollständig außerhalb des Aufnahmeelements angeordnet. Demzufolge kann der eingeklappte Zustand bevorzugt als erster Zustand bezeichnet werden, in welchem der erste Anteil und der zweite Anteil bezogen auf ihre jeweilige Haupterstreckungsebene parallel zu der Längenachse der Lastkraftwagenkabine und zumindest teilweise innerhalb des Aufnahmeelements angeordnet sind. Durch die erste und zweite Translationsbewegung des ersten Anteils bzw. des zweiten Anteils mittels der Führungseinrichtung sind der erste Anteil und der zweiten Anteil von dem ersten in einen zweiten Zustand überführbar, wobei der erste Anteil und der zweite Anteil vollständig außerhalb des Aufnahmeelements und bezogen auf ihre jeweilige Haupterstreckungsebene parallel zu der Längenachse der Lastkraftwagenkabine angeordnet sind. Aus dem zweiten Zustand sind der erste Anteil und zweite Anteil mittels der Gelenkeinrichtung durch die erste und zweite Rotationsbewegung in einen dritten Zustand, welcher dem ausgeklappten Zustand entspricht, überführbar, wobei der erste Anteil und der zweite Anteil im Wesentlichen vollständig außerhalb des Aufnahmeelements und bezogen auf die jeweilige Haupterstreckungsebene senkrecht zu der Längenachse bzw. parallel zu der Breitenachse angeordnet sind.

Gemäß einer bevorzugten Ausführungsform weist der Lastkraftwagenkabineneinrichtungsgegenstand eine, ein Arretierungsmittel und ein Haltemittel umfassende, Arretierungseinrichtung auf, wobei das Arretierungsmittel ein mittels einer dritten Achse schwenkbar mit dem ersten Gleitelement verbundenes erstes Arretierelement und ein mittels einer vierten Achse schwenkbar mit dem zweiten Gleitelement verbundenes zweites Arretierelement umfasst und wobei das Haltemittel ein fest mit dem Aufnahmeelement verbundenes erstes Halteelement und zweites Halteelement umfasst. Bevorzugt sind die dritte und die vierte Achse senkrecht zu der Längenachse entlang der Breitenachse angeordnet. Durch die Arretierungseinrichtung ist die Bewegbarkeit des ersten Anteils und des zweiten Anteils bei Bedarf einschränkbar, wodurch ein ungewollter Übergang des ersten und des zweiten Anteils von dem zugeklappten Zustand in den aufgeklappten Zustand verhindert werden kann. Bevorzugt ist die Arretierungseinrichtung so ausgebildet, dass eine Arretierung reversibel durchführbar ist.

Gemäß einer bevorzugten Ausführungsform sind die erste Translationsbewegung durch ein Eingreifen des ersten Arretierelements in das erste Halteelement und die zweite Translationsbewegung durch ein Eingreifen des zweiten Arretierelements in das zweite Halteelement arretierbar. Auf diese Weise sind der erste Anteil und der zweite Anteil innerhalb des Aufnahmeelements arretierbar und die erste Translationsbewegung und die zweite Translationsbewegung sind unterbunden. Somit ist der Lastkraftwagenkabineneinrichtungsgegenstand in dem platzsparenden zugeklappten Zustand feststellbar und kann erst bei Bedarf aufgeklappt werden.

Weiter bevorzugt sind die erste Translationsbewegung und die zweite Translationsbewegung entlang der Längenachse nach hinten (Richtung X2) beim Übergang von dem zugeklappten Zustand in den aufgeklappten Zustand automatisiert durchführbar, beispielsweise indem das erste Gleitelement und das zweite Gleitelement kraftbeaufschlagt, insbesondere federbeaufschlagt, sind. Bevorzugt könnten eine entsprechende innerhalb des ersten Führungselements angeordnete erste Feder und innerhalb des zweiten Führungselements angeordnete zweite Feder sich entlang der Längenachse erstrecken, wobei die erste Feder und die zweite Feder in dem zugeklappten Zustand eine maximale Federspannung und in dem aufgeklappten Zustand eine minimale Federspannung aufweisen. Die erste Feder und die zweite Feder bewirken eine Kraft auf den ersten Anteil bzw. den zweiten Anteil entlang der Längenachse X nach hinten (Richtung X2). Beispielsweise wird als Feder eine Zugfeder verwendet. Vorteilhaft ist ein erstes axiales Ende der ersten Feder mit dem ersten Gleitelement verbunden und das zweite axiale Ende der ersten Feder mit dem Aufnahmeelement, wobei ein erstes axiales Ende der zweiten Feder mit dem zweiten Gleitelement verbunden ist und das zweite axiale Ende der zweiten Feder mit dem Aufnahmeelement. Weiter bevorzugt ist das zweite axiale Ende der ersten Feder innerhalb des ersten Führungselements das zweite axiale Ende der zweiten Feder innerhalb des zweiten Führungselements mit dem Aufnahmeelement verbunden.

Weiterhin ist es denkbar, dass ein erstes Griffelement an dem ersten Anteil und ein zweites Griffelement an dem zweiten Anteil angeordnet ist, um ein Überführen von dem eingeklappten in den aufgeklappten Zustand zu erleichtern.

Ferner sind in dem aufgeklappten Zustand bevorzugt der erste Anteil und der zweite Anteil aufeinander zu bewegbar, bis der erste Anteil und der zweite Anteil einander kontaktierend angeordnet sind, wobei der erste Anteil und der zweite Anteil entlang der Breitenachse Y nach links und rechts (Richtung Y1 und Richtung Y2) bewegbar angeordnet sind. Dies ist beispielsweise dadurch gewährleistbar, indem das erste Scharnier ein drittes Gleitelement aufweist, welches mit einem an dem ersten Anteil angeordneten dritten Führungselement wechselwirkt und eine dritte Translationsbewegung des ersten Anteils relativ zu dem Aufnahmeelement senkrecht zu der Längenachse der Lastkraftwagenkabine ermöglicht und indem das zweite Scharnier ein viertes Gleitelement aufweist, welches mit einem an dem zweiten Anteil angeordneten vierten Führungselement wechselwirkt und eine vierte Translationsbewegung des zweiten Anteils relativ zu dem Aufnahmeelement senkrecht zu der Längenachse der Lastkraftwagenkabine ermöglicht. Dabei sind das dritte und das vierte Führungselement länglich ausgestaltet und erstrecken sich im Wesentlichen parallel zueinander, wobei sich das dritte und das vierte Führungselement in dem aufgeklappten Zustand parallel zu der Breitenachse der Lastkraftwagenkabine bzw. senkrecht zur Längenachse der Lastkraftwagenkabine und in dem zugeklappten Zustand parallel zu der Längenachse der Lastkraftwagenkabine erstrecken. Das dritte und das vierte Führungselement sind bevorzugt auf einer Fläche des ersten bzw. zweiten Anteils angeordnet, welche sich in der Haupterstreckungsebene des ersten bzw. zweiten Anteils erstreckt und der ersten bzw. zweiten Nutzfläche gegenüberliegend angeordnet ist. Auf diese Weise können der erste Anteil und der zweite Anteil eine einheitliche Gesamtfläche ausbilden und beispielsweise als ein großer Bildschirm verwendet werden.

Außerdem ist gemäß einer weiteren bevorzugten Ausführungsform das erste Scharnier mittels einer fünften Achse schwenkbar mit dem ersten Gleitelement und das zweite Scharnier mittels einer sechsten Achse schwenkbar mit dem zweiten Gleitelement verbunden. Die fünfte und die sechste Achse sind bevorzugt senkrecht zu der Längenachse und parallel zu der Breitenachse angeordnet. Diese Anordnung gewährleistet eine dritte Rotationsbewegung des ersten Anteils um die fünfte Achse und eine vierte Rotationsbewegung des zweiten Anteils um die sechste Achse, wodurch der erste Anteil und der zweite Anteil im Wesentlichen entlang der Höhenachse verschwenkbar sind, sodass eine verbesserte Draufsicht von Seiten des Fahrzeugführers bzw. des Beifahrers auf den jeweiligen Anteil möglich ist. Hierbei ist zu beachten, dass der Lastkraftwagenkabineneinrichtungsgegenstand im Innenraum, insbesondere im Armaturenbereich oder im Bereich oberhalb der Windschutzscheibe angeordnet ist und der erste Anteil und der zweite Anteil bevorzugt gemäß einem Blickwinkel des Fahrzeugführers bzw. des Beifahrers ausrichtbar sind.

Weitere Vorteile, Ziele und Eigenschaften der vorliegenden Erfindung werden anhand der anliegenden Figuren und nachfolgender Beschreibung erläutert. Gleichartige Komponenten können in den verschiedenen Ausführungsformen gleiche Bezugszeichen aufweisen.

In den Figuren zeigen:
- Fig. 1: eine perspektivische Vorderansicht des Lastkraftwagenkabineneinrichtungsgegenstandes in einem zugeklappten Zustand nach einer Ausführungsform ;
- Fig. 2: eine perspektivische Rückansicht des Lastkraftwagenkabineneinrichtungsgegenstandes in einem zugeklappten Zustand nach einer Ausführungsform ;
- Fig. 3: eine Draufsicht des Lastkraftwagenkabineneinrichtungsgegenstands in einem zugeklappten Zustand nach einer Ausführungsform;
- Fig. 4: eine perspektivische Vorderansicht des Lastkraftwagenkabineneinrichtungsgegenstandes in einem aufgeklappten Zustand nach einer Ausführungsform;
- Fig. 5: eine perspektivische Rückansicht des Lastkraftwagenkabineneinrichtungsgegenstandes in einem aufgeklappten Zustand nach einer Ausführungsform;
- Fig. 6: eine Draufsicht des Lastkraftwagenkabineneinrichtungsgegenstands in einem aufgeklappten Zustand nach einer Ausführungsform;
- Fig. 7: eine Schnittansicht eines Abschnitts des Aufnahmeelements nach einer Ausführungsform;
- Fig. 8: eine Schnittansicht eines Abschnitts des Lastkraftwagenkabineneinrichtungsgegenstandes in einem zugeklappten Zustand nach einer Ausführungsform;
- Fig. 9: eine vergrößerte Seitenansicht eines Abschnitts des Lastkraftwagenkabineneinrichtungsgegenstandes in einem zugeklappten Zustand nach einer Ausführungsform;
- Fig. 10: eine vergrößerte Seitenansicht der Führungseinrichtung, der Gelenkeinrichtung und der Arretierungseinrichtung in einem zugeklappten Zustand nach einer Ausführungsform;
- Fig. 11: eine vergrößerte Seitenansicht der Gelenkeinrichtung nach einer Ausführungsform;
- Fig. 12: eine Detailansicht des Gleitelements nach einer Ausführungsform;
- Fig. 13: eine Detailansicht des Halteelements nach einer Ausführungsform;
- Fig. 14: eine Detailansicht des Arretierelements nach einer Ausführungsform;
- Fig. 15: eine Detailansicht der Arretierungseinrichtung nach einer Ausführungsform;
- Fig. 16: eine Schnittansicht eines Abschnitts des Aufnahmeelements nach einer Ausführungsform;
- Fig. 17: eine Seitenansicht der Arretierungseinrichtung nach einer Ausführungsform mit einer Darstellung der Arretierung;
- Fig. 18a: eine perspektivische Ansicht des Lastkraftwagenkabineninnenraums mit integriertem Lastkraftwagenkabineneinrichtungsgegenstand in einem zugeklappten Zustand;
- Fig. 18b: eine perspektivische Ansicht des Lastkraftwagenkabineninnenraums mit integriertem Lastkraftwagenkabineneinrichtungsgegenstand in einem aufgeklappten Zustand.

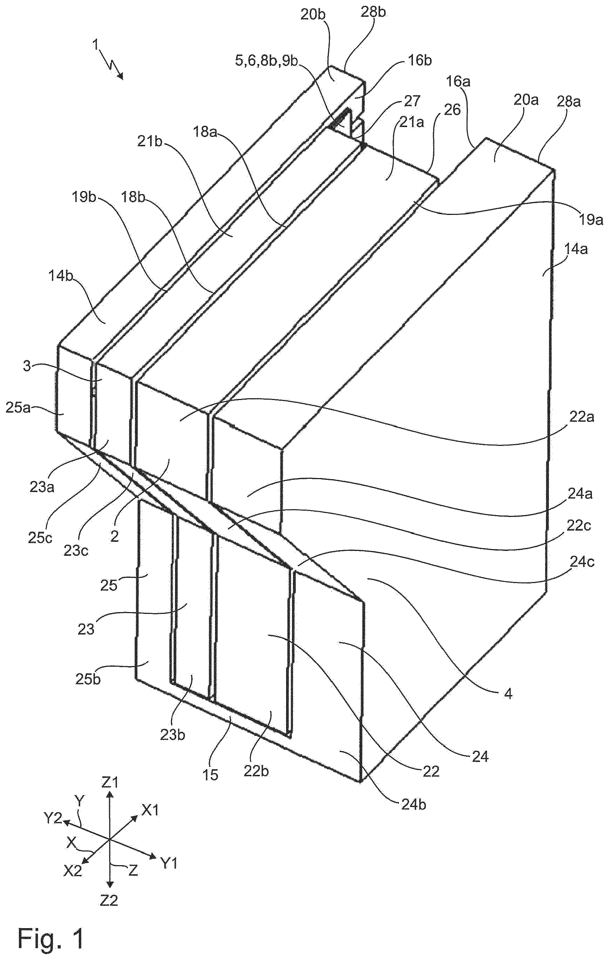

Die Figuren 1 bis 3 zeigen einen Lastkraftwagenkabineneinrichtungsgegenstand 1 in einem zugeklappten Zustand. Der Lastkraftwagenkabineneinrichtungsgegenstand 1 umfasst ein Aufnahmeelement 4, einen ersten Anteil 2 und einen zweiten Anteil 3, wobei der erste Anteil 2 und der zweite Anteil 3 durch eine Führungseinrichtung 5 und eine Gelenkeinrichtung 6 mit dem Aufnahmeelement 4 verbunden sind. Der erste Anteil 2 und der zweite Anteil 3 sind mittels der Führungseinrichtung 5 und der Gelenkeinrichtung 6 flügelartig entlang einer Längenachse X der Lastkraftwagenkabine 100 auf- und zuklappbar, wobei der erste Anteil 2 und der zweite Anteil 3 bezogen auf eine jeweilige Haupterstreckungsebene in dem zugeklappten Zustand im Wesentlichen parallel zu der Längenachse X der Lastkraftwagenkabine 100 angeordnet sind.

Der Lastkraftwagenkabineneinrichtungsgegenstand (1) bzw. die Lastkraftwagenkabine (100) erstrecken sich entlang einer Höhenachse Z, einer Breitenachse Y und einer Längenachse X, wobei den jeweiligen Achsen jeweils zwei Richtungen zugeordnet sind. So umfasst die Höhenachse Z die Richtungen Z1 (nach oben) und Z2 (nach unten), die Breitenachse Y die Richtungen Y1 (nach rechts) und Y2 (nach links) und die Längenachse X die Richtungen X1 (nach vorne) und X2 (nach hinten). Außerdem sind die Abbildungen jeweils mit einem entsprechenden kartesischen Koordinatensystem versehen.

Die Führungseinrichtung 5 weist ein erstes Führungselement 7a zum Durchführen einer ersten Translationsbewegung des ersten Anteils 2 relativ zu dem Aufnahmeelement 4 entlang der Längenachse X der Lastkraftwagenkabine 100, ein zweites Führungselement 7b zum Durchführen einer zweiten Translationsbewegung des zweiten Anteils 3 relativ zu dem Aufnahmeelement 4 entlang der Längenachse X der Lastkraftwagenkabine 100, ein mit dem ersten Führungselement 7a wechselwirkendes erstes Gleitelement 8a und ein mit dem zweiten Führungselement 7b wechselwirkendes zweites Gleitelement 8b auf. Das erste 7a und das zweite Führungselement 7b sind länglich ausgestaltet und erstrecken sich im Wesentlichen parallel zueinander entlang der Längenachse X der Lastkraftwagenkabine 100 an dem Aufnahmeelement 4.

Das erste Gleitelement 8a ist fest mit dem ersten Anteil 2 und das zweite Gleitelement 8b ist fest mit dem zweiten Anteil 3 verbunden, wobei das erste Gleitelement 8a zumindest teilweise innerhalb des ersten Führungselements 7a und das zweite Gleitelement 8b zumindest teilweise innerhalb des zweiten Führungselements 7b angeordnet ist und wobei das erste Gleitelement 8a entlang des ersten Führungselements 7a und das zweite Gleitelement 8b entlang des zweiten Führungselements 7b entlang der Längenachse X der Lastkraftwagenkabine 100 bewegbar ist.

Das erste Führungselement 7a und das zweite Führungselement 7b sind entlang der Längenachse X in der Längenrichtung X1 (nach vorne) offen und in der Längenrichtung X2 (nach hinten) geschlossen ausgebildet. Demnach sind das erste Führungselement 7a und das zweite Führungselement 7b entlang der Längenachse X nach vorn (Richtung X1) versetzt zu der Frontfläche 24/oberen Abschnitt 24a des ersten U-Schenkelelements 14a bzw. der Frontfläche 25/oberen Abschnitt 25a des zweiten U-Schenkelelements 14b angeordnet und erstrecken sich nicht über die volle Erstreckung des Aufnahmeelements 4 entlang der Längenachse X.

Zusätzlich sind ein das erste Führungselement 7a begrenzendes erstes Begrenzungselement 29a an der Innenfläche 16a des ersten U-Schenkelelements 14a und ein das zweite Führungselement 7b begrenzendes zweites Begrenzungselement 29b an der Innenfläche 16b des zweiten U-Schenkelelements 14b gegenüberliegend angeordnet. Diese Begrenzungselemente 29a, 29b beschränken die erste bzw. die zweite Translationsbewegung des ersten 8a bzw. zweiten Gleitelements 8b innerhalb der Führungselemente 7a, 7b entlang der Längenachse X nach vorn (Richtung X1). In diesem Ausführungsbeispiel sind das erste 29a und das zweite Begrenzungselement 29b in der Längenrichtung X1 benachbart zu der jeweiligen Rückfläche 28a, 28b des entsprechenden U-Schenkelelements 14a, 14b angeordnet. Alternativ könnten das erste 29a und das zweite Begrenzungselement 29b entlang der Längenachse X nach hinten (Richtung X2) angeordnet sein, wobei die Begrenzungselemente 29a, 29b auch entlang der Längenachse X versetzt zueinander angeordnet sein können.

In dem zugeklappten und arretierten Zustand sind das erste Gleitelement 8a und das zweite Gleitelement 8b entlang der Längenachse X nach vorne (Richtung X1) bezogen auf das erste Führungselement 7a bzw. das zweite Führungselement 7b das erste Begrenzungselement 29a bzw. das zweite Begrenzungselement 29b beabstandet angeordnet.

Die Gelenkeinrichtung 6 weist ein fest mit dem ersten Anteil 2 verbundenes erstes Scharnier 9a zum Durchführen einer ersten Rotationsbewegung des ersten Anteils 2 relativ zu dem Aufnahmeelement 4 und ein fest mit dem zweiten Anteil 3 verbundenes zweites Scharnier 9b zum Durchführen einer zweiten Rotationsbewegung des zweiten Anteils 3 relativ zu dem Aufnahmeelement 4 auf. Das erste Scharnier 9a ist fest mit dem ersten Gleitelement 8a und das zweite Scharnier 9b ist fest mit dem zweiten Gleitelement 8b verbunden. Ferner weist das erste Scharnier 9a eine erste Drehachse 10a und das zweite Scharnier 9b eine zweite Drehachse 10b auf, wobei die erste 10a und die zweite Drehachse 10b im Wesentlichen senkrecht zu der Längenachse X der Lastkraftwagenkabine 100 angeordnet sind. Bei der ersten Rotationsbewegung und der zweiten Rotationsbewegung handelt es sich bevorzugt um eine Rotation im Wesentlichen um 90°.

Der Lastkraftwagenkabineneinrichtungsgegenstand 1 weist eine, ein Arretierungsmittel 12 und ein Haltemittel 13 umfassende, Arretierungseinrichtung 11 auf, wobei das Arretierungsmittel 12 ein mittels einer dritten Achse 30a schwenkbar mit dem ersten Gleitelement 8a verbundenes erstes Arretierelement 12a und ein mittels einer vierten Achse 30b schwenkbar mit dem zweiten Gleitelement 8b verbundenes zweites Arretierelement 12b umfasst und wobei das Haltemittel 13 ein fest mit dem Aufnahmeelement 4 verbundenes erstes Halteelement 13a und zweites Halteelement 13b umfasst.

Die erste Translationsbewegung ist durch ein Eingreifen des ersten Arretierelements 12a in das erste Halteelement 13a und die zweite Translationsbewegung ist durch ein Eingreifen des zweiten Arretierelements 12b in das zweite Halteelement 13b arretierbar.

Die Haupterstreckungsachse jeweils des ersten Anteils 2 und des zweiten Anteils 3 erstreckt sich in dem zugeklappten Zustand entlang der Längenachse und der Höhenachse Z.

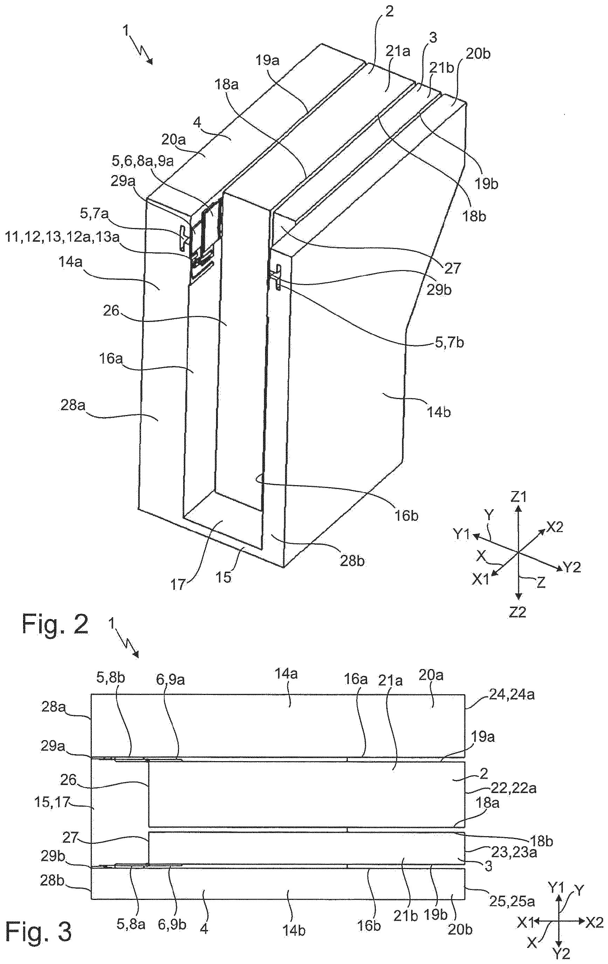

Das Aufnahmeelement 4 ist im Wesentlichen U-förmig ausgebildet und weist zwei sich ausgehend von einem U-Verbindungselement 15 entlang der Höhenachse Z nach oben (Richtung Z1) parallel zueinander erstreckende U-Schenkelelemente 14a, 14b auf, wobei das erste U-Schenkelelement 14a und das zweite U-Schenkelelement 14b durch das sich in entlang der Längenachse X und der Breitenachse Y erstreckende U-Verbindungselement 15 verbunden sind. Das U-Verbindungselement 15 bildet gleichzeitig die Grundfläche des Lastkraftwagenkabineneinrichtungsgegenstandes 1 aus. Das erste U-Schenkelelement 14a weist ein erstes Führungselement 7a und das zweite U-Schenkelelement ein zweites Führungselement 7b auf, wobei sich die Führungselemente 7a, 7b parallel zueinander entlang der Längenachse X erstrecken. Gemäß dem gezeigten Ausführungsbeispiel sind die Führungselemente 7a, 7b als T-Führungsnut ausgebildet, alternativ könnte auch eine Schienenvorrichtung vorgesehen sein. Dies ist teilweise aus der Fig. 2 ersichtlich. Die Führungselemente 7a, 7b sind bezogen auf die Höhenachse Z und die Höhenrichtung Z1 an/in einem oberen Abschnitt der U-Schenkelelemente 14a, 14b angeordnet. Das erste Führungselement 7a ist auf der Innenfläche 16a des ersten U-Schenkelelements 14a in der Breitenrichtung Y2 geöffnet ausgebildet, wobei das zweite Führungselement 7b auf der Innenfläche 16b des zweiten U-Schenkelelements 14b in der Breitenrichtung Y1 geöffnet ausgebildet ist und die Führungselemente 7a, 7b somit einander zugewandt angeordnet sind.

Entsprechend der Ausführung des ersten Führungselements 7a und des zweiten Führungselements 7b als T-Führungsnut sind das erste Gleitelement 8a und das zweite Gleitelement 8b im Wesentlichen komplementär als T-Nutenstein ausgebildet. Alternativ könnten die Gleitelemente 8a, 8b auch als Schiene ausgebildet sein, komplementär zu Schienen-förmigen Führungselementen 7a, 7b.

Der erste Anteil 2 und der zweite Anteil 3 erstrecken sich im zugeklappten Zustand entlang der Längenachse X und der Höhenachse Z innerhalb des U-förmigen Aufnahmeelements 4. Parallel zu der Haupterstreckungsebene angeordnete Flächen des ersten Anteils 2 und des zweiten Anteils 3, umfassen eine erste Nutzfläche 18a des ersten Anteils 2 und eine zweite Nutzfläche 18b des zweiten Anteils 3, welche im zugeklappten Zustand einander zugewandt angeordnet sind, und eine erste Außenfläche 19a des ersten Anteils und eine zweite Außenfläche 19b des zweiten Anteils 3, wobei die erste Außenfläche 19a der Innenfläche 16a des ersten U-Schenkelelements 14a und die zweite Außenfläche 19b der Innenfläche 16b des zweiten U-Schenkelelements 14b im zugeklappten Zustand zugewandt angeordnet ist. Eine sich in dem zugeklappten Zustand entlang der Längenachse X erstreckende obere Fläche 21a des ersten Anteils 2 und eine sich in dem zugeklappten Zustand entlang der Längenachse X erstreckende obere Fläche 21b des zweiten Anteils 3 sind in der Höhenrichtung Z1 bündig abschließend mit einer sich entlang der Längenachse X erstreckenden oberen Fläche 20a des ersten U-Schenkelelements 14a und einer sich entlang der Längenachse X erstreckenden oberen Fläche 20b des zweiten U-Schenkelelements 14b angeordnet.

Der erste Anteil 2 weist eine Frontfläche 22 auf, wobei die Frontfläche 22 einen, sich entlang der Höhenachse Z erstreckenden, in der Höhenrichtung Z1 oberen Abschnitt 22a und einen, sich entlang der der Höhenachse Z erstreckenden, in der Höhenrichtung Z2 unteren Abschnitt 22b aufweist, wobei der untere Abschnitt 22b entlang der Längenachse X nach vorne (Längenrichtung X1) versetzt zu dem oberen Abschnitt 22a angeordnet ist. Der obere Abschnitt 22a der Frontfläche 22 des ersten Anteils 2 ist über einen gegenüber der Höhenachse Z geneigten Übergangsabschnitt 22c mit dem unteren Abschnitt 22b der Frontfläche 22 des ersten Anteils 2 verbunden.

Der zweite Anteil 3 weist eine Frontfläche 23 auf, wobei die Frontfläche 23 einen, sich entlang der Höhenachse Z erstreckenden, in der Höhenrichtung Z1 oberen Abschnitt 23a und einen, sich entlang der der Höhenachse Z erstreckenden, in der Höhenrichtung Z2 unteren Abschnitt 23b aufweist, wobei der untere Abschnitt 23b entlang der Längenachse X nach vorne (Längenrichtung X1) versetzt zu dem oberen Abschnitt 23a angeordnet ist. Der obere Abschnitt 23a der Frontfläche 23 des zweiten Anteils 3 ist über einen gegenüber der Höhenachse Z geneigten Übergangsabschnitt 23c mit dem unteren Abschnitt 23b der Frontfläche 23 des zweiten Anteils 3 verbunden.

Das erste U-Schenkelelemente 14a weist eine Frontfläche 24 auf, wobei die Frontfläche 24 einen, sich entlang der Höhenachse Z erstreckenden, in der Höhenrichtung Z1 oberen Abschnitt 24a und einen, sich entlang der Höhenachse Z erstreckenden, in der Höhenrichtung Z2 unteren Abschnitt 24b aufweist, wobei der untere Abschnitt 24b entlang der Längenachse X nach vorne (Längenrichtung X1) versetzt zu dem oberen Abschnitt 24a angeordnet ist. Der obere Abschnitt 24a der Frontfläche 24 des ersten U-Schenkelelements 14a ist über einen gegenüber der Höhenachse Z geneigten Übergangsabschnitt 24c mit dem unteren Abschnitt 24b der Frontfläche 24 des ersten U-Schenkelelements 14a verbunden.

Das zweite U-Schenkelelemente 14b weist eine Frontfläche 25 auf, wobei die Frontfläche 25 einen, sich entlang der Höhenachse Z erstreckenden, in der Höhenrichtung Z1 oberen Abschnitt 25a und einen, sich entlang der der Höhenachse Z erstreckenden, in der Höhenrichtung Z2 unteren Abschnitt 25b aufweist, wobei der untere Abschnitt 25b entlang der Längenachse X nach vorne (Längenrichtung X1) versetzt zu dem oberen Abschnitt 25a angeordnet ist. Der obere Abschnitt 25a der Frontfläche 25 des zweiten U-Schenkelelements 14b ist über einen gegenüber der Höhenachse Z geneigten Übergangsabschnitt 25c mit dem unteren Abschnitt 25b der Frontfläche 25 des zweiten U-Schenkelelements 14b verbunden.

Die Frontflächen 22, 23, 24, 25 sind im zugeklappten Zustand in die Längenrichtung X2 (nach hinten) weisend angeordnet.

Die Frontflächen 22, 23, 24, 25 können ebenfalls eine andere Ausgestaltung aufweisen und beispielsweise sich durchgängig parallel zu der Höhenachse Z erstreckend ausgebildet sein. Die Ausgestaltung der Fronflächen 22, 23, 24, 25 ist variabel und richtet sich nach einem Oberflächenverlauf des Innenraums der Lastkragenwagenkabine, in welchen der Lastkraftwagenkabineneinrichtungsgegenstand eingebaut ist.

Ferner weist der erste Anteil 2 eine sich entlang der Höhenachse Z erstreckende Rückfläche 26 und der zweite Anteil 3 eine sich entlang der Höhenachse Z erstreckende Rückfläche 27 auf. Die Rückfläche 26 ist parallel zu der Rückfläche 27 angeordnet. Des Weiteren weisen das erste U-Schenkelelement 14a eine sich entlang der Höhenachse Z erstreckende Rückfläche 28a und das zweite U-Schenkelelement 14b eine sich entlang der Höhenachse Z erstreckende Rückfläche 28b auf. Die Rückflächen 26, 27 der Anteile 2, 3 sind entlang der Längenachse X nach hinten (Längenrichtung X2) versetzt zu den Rückflächen 28a, 28b der U-Schenkelelemente 14a, 14b angeordnet. Dies ist besonders aus den Figuren 2 und 3 ersichtlich. Die Rückflächen 26, 27, 28a, 28b sind im zugeklappten Zustand in die Längenrichtung X1 (nach vorne) weisend angeordnet.

Eine Erstreckung des ersten Anteils 2 und des zweiten Anteils 3 entlang der Breitenachse Y und somit eine Erstreckung der jeweiligen Frontfläche 22, 23 und der Rückflächen 26, 27 ist unterschiedlich ausgebildet. Auch eine Erstreckung des ersten U-Schenkelelements 14a und des zweiten U-Schenkelelements 14b entlang der Breitenachse Y und somit eine Erstreckung der jeweiligen Frontfläche 24, 24 und der Rückflächen 28a, 28b ist unterschiedlich ausgebildet. Alternativ können die Erstreckungen der Anteile 2, 3 und der U-Schenkelelemente 14a, 14b auch anders ausgebildet sein, beispielsweise identisch.

Wie vor allem aus Figur 3 ersichtlich, sind der erste Anteil 2 und der zweite Anteil 3 voneinander und jeweils von dem benachbarten U-Schenkelelement 14a, 14b entlang der Breitenachse Y voneinander beabstandet, um Reibungen bzw. Abnutzungen beim Übergang zwischen dem zugeklappten und dem aufgeklappten Zustand zu reduzieren.

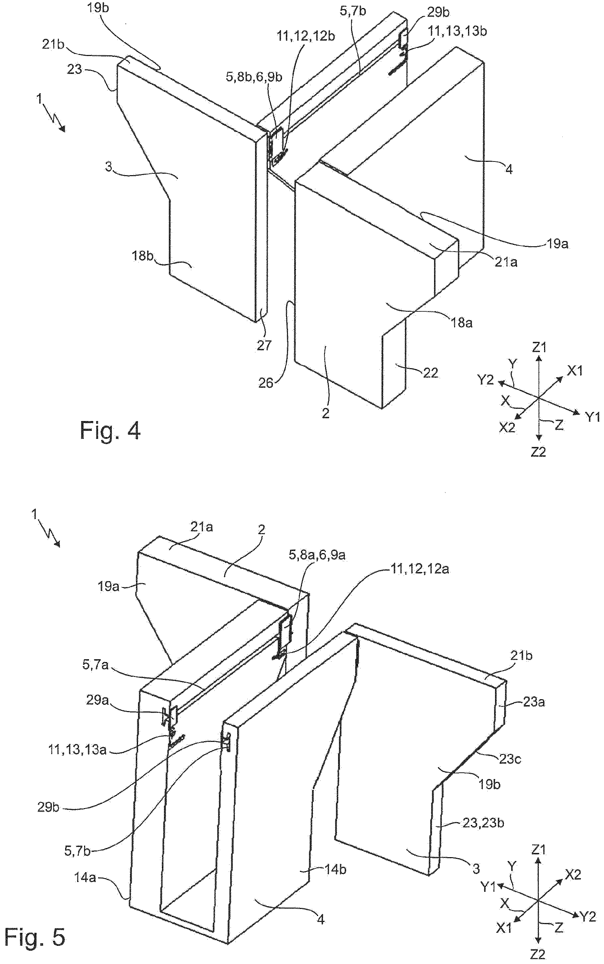

In den Figuren 4 bis 6 ist der Lastkraftwagenkabineneinrichtungsgegenstand 1 in einem aufgeklappten Zustand dargestellt.

Der erste Anteil 2 und der zweite Anteil 3 sind mittels der Führungseinrichtung 5 und der Gelenkeinrichtung 6 flügelartig entlang einer Längenachse X der Lastkraftwagenkabine 100 auf- und zuklappbar, wobei der erste Anteil 2 und der zweite Anteil 3 bezogen auf eine jeweilige Haupterstreckungsebene in dem aufgeklappten Zustand im Wesentlichen senkrecht zu der Längenachse X der Lastkraftwagenkabine 100 angeordnet sind. Die Nutzflächen 18a, 18b sowie die Außenflächen 19a, 19b des ersten Anteils 2 bzw. des zweiten Anteils 3 erstrecken sich in dem aufgeklappten Zustand entlang der Breitenachse Y, wobei sich der erste Anteil 2 relativ zu dem Aufnahmeelement 4 in die Breitenrichtung Y1 und zweite Anteil 3 relativ zu dem Aufnahmeelement 4 in die Breitenrichtung Y2 erstreckt. Die Rückfläche 26 des ersten Anteils 2 und die Rückfläche 27 des zweiten Anteils 3 sind einander zugewandt angeordnet. Die Frontfläche 22 des ersten Anteils 2 ist im aufgeklappten Zustand in die Breitenrichtung Y1 (nach rechts) weisend und die Frontfläche 23 des zweiten Anteils 3 ist im aufgeklappten Zustand in die Breitenrichtung Y2 (nach links) weisend angeordnet.

Der erste Anteil 2 und der zweite Anteil 3 sind in dem aufgeklappten Zustand vollständig außerhalb des Aufnahmeelements 4 angeordnet.

Das erste Gleitelement 8a und das zweite Gleitelement 8b sind im ausgeklappten Zustand entlang der Längenachse X nach hinten (Richtung X2) benachbart zur Frontfläche 24 des ersten U-Schenkelelements 14a bzw. zur Frontfläche 25 des zweiten U-Schenkelelements 14b angeordnet.

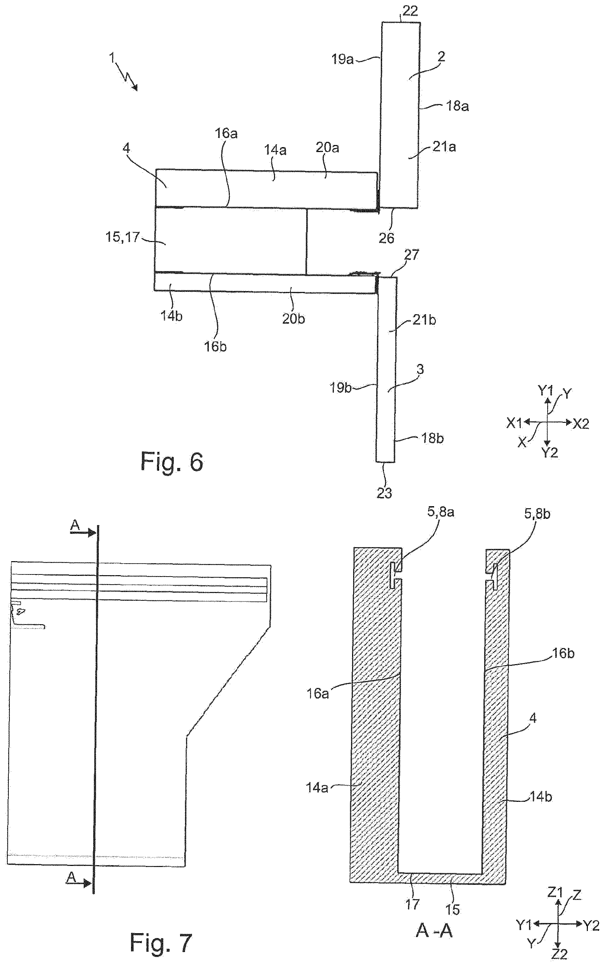

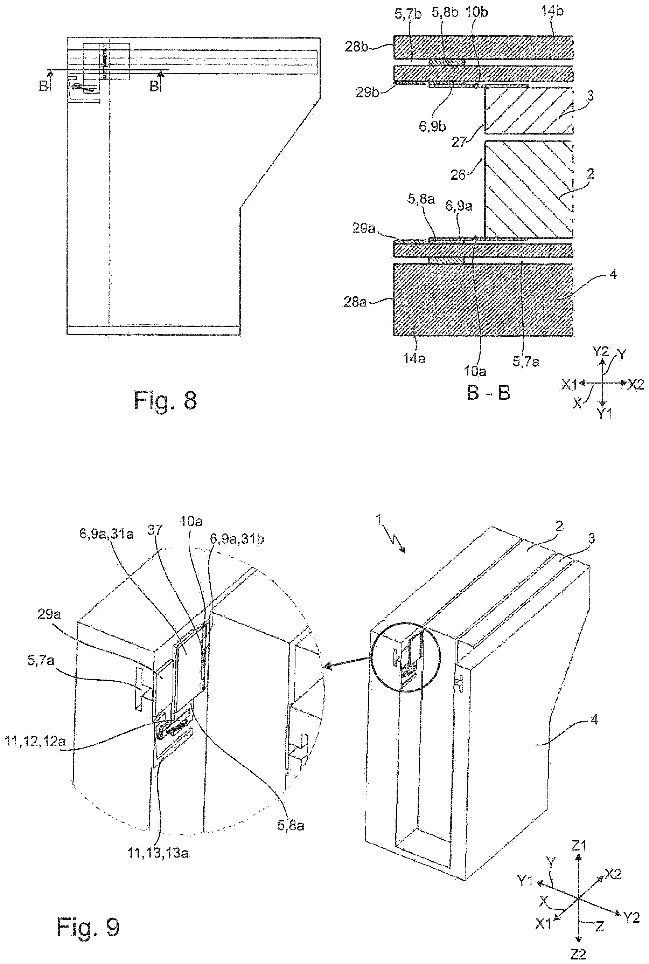

Die Figuren 7 und 8 zeigen verschiedene Schnittansichten des Lastkraftwagenkabineneinrichtungsgegenstandes 1.

In Figur 7 ist eine Schnittansicht des Aufnahmeelements 4 entlang A-A (Höhenachse Z) gezeigt mit Blick entlang der Längenachse X nach hinten (Richtung X2). Hierbei zeigt sich die Anordnung des ersten Führungselementes 7a innerhalb des ersten U-Schenkelelements 14a und des zweiten Führungselementes 7b innerhalb des zweiten U-Schenkelelementes 14b jeweils entlang der Längenachse X. Das Aufnahmeelement weist eine im Wesentlichen rechteckige Form auf.

Die Figur 8 zeigt eine Schnittansicht des Lastkraftwagenkabineneinrichtungsgegenstandes 1 im zugeklappten Zustand entlang B-B (Längenachse X) mit Blick entlang der Höhenachse Z nach oben (Richtung Z1) durch die Arretierungseinrichtung 11. Das erste 8a und das zweite Gleitelement 8b sind zumindest teilweise innerhalb des ersten 7a bzw. zweiten Führungselements 7b angeordnet, wobei sich die Gleitelemente 8a, 8b im Wesentlichen entlang der Längenachse X und der Höhenachse Z innerhalb der Führungselemente 7a, 7b erstrecken. Gemäß der Figur 8 erstreckt sich das erste Gleitelement 8a entlang der Breitenachse Y nach rechts (Richtung Y1) in das erste Führungselement 7a und das zweite Gleitelement 8b entlang der Breitenachse Y nach links (Richtung Y2) in das zweite Führungselement 7b. Ferner ist die erste Drehachse 10a entlang der Längenachse X nach vorne (Richtung X1) vor dem ersten Gleitelement 8a und die zweite Drehachse 10b entlang der Längenachse X nach vorne (Richtung X1) vor dem zweiten Gleitelement 8b angeordnet, wobei das erste Begrenzungselement 29a entsprechend hinter dem ersten Gleitelement 8a und das zweite Begrenzungselement 29b hinter dem zweiten Gleitelement 8b angeordnet.

In den Figuren 9 bis 11 sind die Führungseinrichtung 5, die Gelenkeinrichtung 6 und die Arretierungseinrichtung 11 im Detail gezeigt. Die Ausgestaltung des ersten Arretierelements 12a und des ersten Halteelements 13a entspricht der des zweiten Arretierelements 12b bzw. des zweiten Halteelements 13b, auch wenn sie nur für eines der Elemente beschrieben ist.

Das erste Scharnier 9a und das zweite Scharnier 9b weisen jeweils zwei durch die erste Drehachse 10a bzw. die zweite Drehachse 10b schwenkbar verbundene plattenförmige Elemente 31a-d auf. Das erste Scharnier 9a ist mittels dem plattenförmigen Element 31a mit dem ersten Gleitelement 8a und mittels dem plattenförmigen Element 31b mit dem ersten Anteil 2 verbunden. Das zweite Scharnier 9b (hier nicht gezeigt) ist mittels dem plattenförmigen Element 31c mit dem zweiten Gleitelement 8b und mittels dem plattenförmigen Element 31d mit dem zweiten Anteil 3 verbunden.

Bei den Scharnieren 9a, 9b handelt es sich gemäß der Ausführungsform um federbeaufschlagte Scharniere bzw. Drehmomentscharniere, welche jeweils eine Drehfeder 37 aufweisen. Dadurch sind die erste und die zweite Rotationsbewegung des ersten Anteils 2 bzw. des zweiten Anteils 3 automatisiert durchführbar.

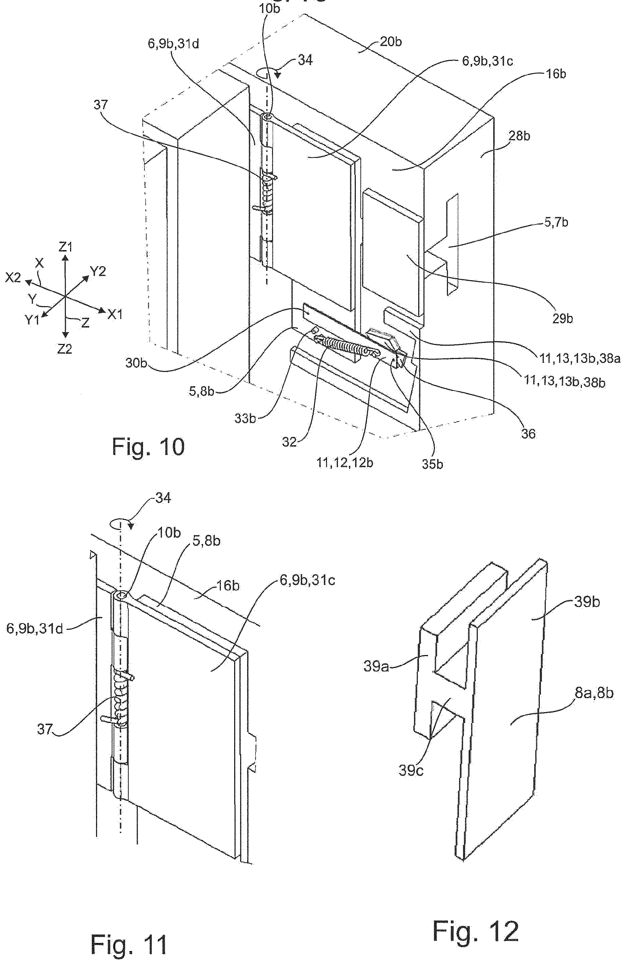

Die in Fig. 10 gezeigte zweite Drehachse 10b weist eine Rotationsrichtung 34 auf, welche im Uhrzeigersinn verläuft. Entsprechend weist die nicht gezeigte erste Drehachse 10a eine gegenläufige Rotationsrichtung gegen den Uhrzeigersinn auf.

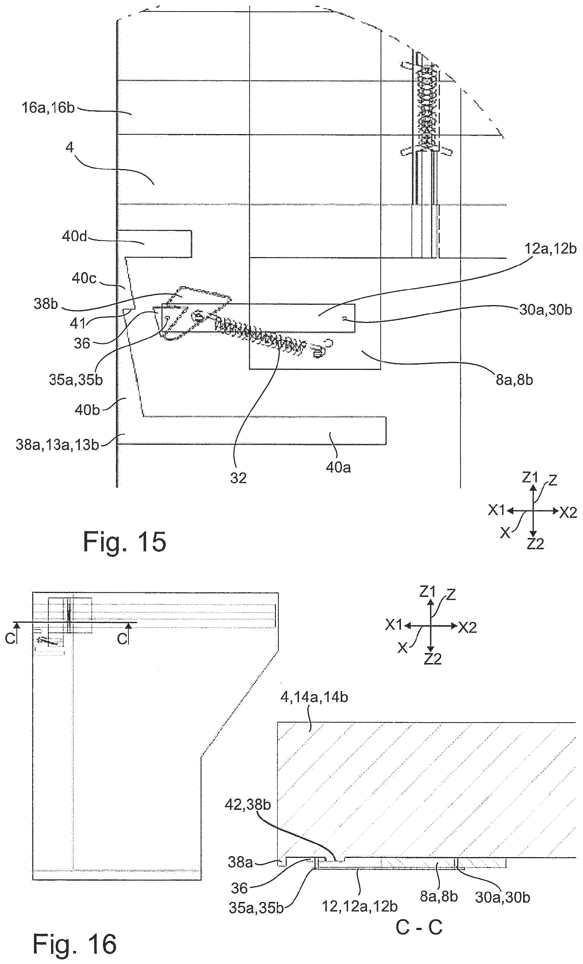

Das zweite Arretierelement 12b ist mittels der vierten Achse 30b schwenkbar mit dem zweiten Gleitelement 8b verbunden und ist im Wesentlichen länglich ausgestaltet (siehe auch Fig. 15) und erstreckt sich im zugeklappten Zustand (arretierender Zustand) entlang der Längenachse X, wobei ein in der Längenrichtung X2 (nach hinten) angeordneter Abschnitt des zweiten Arretierelements 12b schwenkbar mit der vierten Achse 30b verbunden ist. Weiterhin weist ein in der Längenrichtung X1 (nach vorne) angeordneter Abschnitt des Arretierelements 12b ein durch eine sechste Achse 35b schwenkbar verbundenes dreieck-förmiges Rastelement 36 auf. Ferner ist eine Zugfeder 32 mit einem ersten axialen Ende mit dem Gleitelement 8b und mit einem zweiten axialen Ende mit dem zweiten Arretierelement 12b verbunden, wobei das zweite axiale Ende der Zugfeder 32 entlang der Längenachse X zwischen der vierten Achse 30b und der sechsten Achse 35b an dem Arretierelement 12b angeordnet. Des Weiteren ist ein Vorsprung 33b bezogen auf die Höhenachse Z in Höhenrichtung Z2 (nach unten) und bezogen auf die Längenachse X in Längenrichtung X1 (nach vorne) versetzt zu der vierten Achse 30b auf dem zweiten Gleitelement 8b angeordnet. Dieser Vorsprung 33b schränkt die Rotationsbewegung des zweiten Arretierelements 12b in der Höhenrichtung Z2 (nach unten) ein. Der Vorsprung 33b erstreckt sich von dem zweiten Gleitelement 8b ausgehend in der Breitenrichtung Y1 (nach rechts).

Das erste Arretierelement 12a ist mittels der dritten Achse 30a schwenkbar mit dem ersten Gleitelement 8a verbunden und ist im Wesentlichen länglich ausgestaltet (siehe auch Fig. 15) und erstreckt sich im zugeklappten Zustand (arretierender Zustand) entlang der Längenachse X, wobei ein in der Längenrichtung X2 (nach hinten) angeordneter Abschnitt des ersten Arretierelements 12a schwenkbar mit der dritten Achse 30a verbunden ist. Weiterhin weist ein in der Längenrichtung X1 (nach vorne) angeordneter Abschnitt des Arretierelements 12a ein durch eine fünfte Achse 35a schwenkbar verbundenes dreieck-förmiges Rastelement 36 auf. Ferner ist eine Zugfeder 32 mit einem ersten axialen Ende mit dem Gleitelement 8b und mit einem zweiten axialen Ende mit dem zweiten Arretierelement 12b verbunden, wobei das zweite axiale Ende der Zugfeder 32 entlang der Längenachse X zwischen der dritten Achse 30a und der fünften Achse 35a an dem ersten Arretierelement 12a angeordnet. Des Weiteren ist ein Vorsprung 33a bezogen auf die Höhenachse Z in Höhenrichtung Z2 (nach unten) und bezogen auf die Längenachse X in Längenrichtung X1 (nach vorne) versetzt zu der dritten Achse 30a auf dem ersten Gleitelement 8a angeordnet. Dieser Vorsprung 33a schränkt die Rotationsbewegung des ersten Arretierelements 12a in der Höhenrichtung Z2 (nach unten) ein. Der Vorsprung 33a erstreckt sich von dem ersten Gleitelement 8a ausgehend in der Breitenrichtung Y2 (nach links).

Das Haltemittel 13 umfasst das fest mit dem Aufnahmeelement 4 verbundene erste Halteelement 13a (angeordnet an der Innenfläche 16a des ersten U-Schenkelelements 14a) und zweite Halteelement 13b (angeordnet an der Innenfläche 16b zweiten Schenkelelements 14b). Das Halteelement 13a, 13b umfasst ein äußeres Kulissenelement 38a und ein von dem äußeren Kulissenelement 38a zumindest teilweise umgebenes inneres Kulissenelement 38b. Durch das äußere Kulissenelement 38a ist das Arretierelement 12a, 12b bzw. das Rastelement 36 führbar, wobei es durch das innere Kulissenelement 38b arretierbar ist.

Das Gleitelement 8a, 8b ist entlang der Längenachse X zumindest geringfügig beabstandet zu dem Begrenzungselement 29a, 29b angeordnet, um eine Lösung der Arretierung zu gewährleisten.

Die Figur 12 zeigt das Gleitelement 8a, 8b im Detail. Das Gleitelement 8a, 8b ist gemäß der gezeigten Ausführungsform als T-Nutenstein ausgebildet. Das Gleitelement 8a, 8b weist einen Führungsabschnitt 39a und einen damit durch einen Steg 39c verbundenen plattenförmigen Befestigungsabschnitt 39b auf. Der Führungsabschnitt 39a ist bevorzugt komplementär zu dem Führungselement 7a, 7b ausgebildet und ist zumindest teilweise innerhalb des Führungselements 7a, 7b angeordnet. An dem plattenförmigen Befestigungsabschnitt 39b ist das Scharnier 9a, 9b angeordnet.

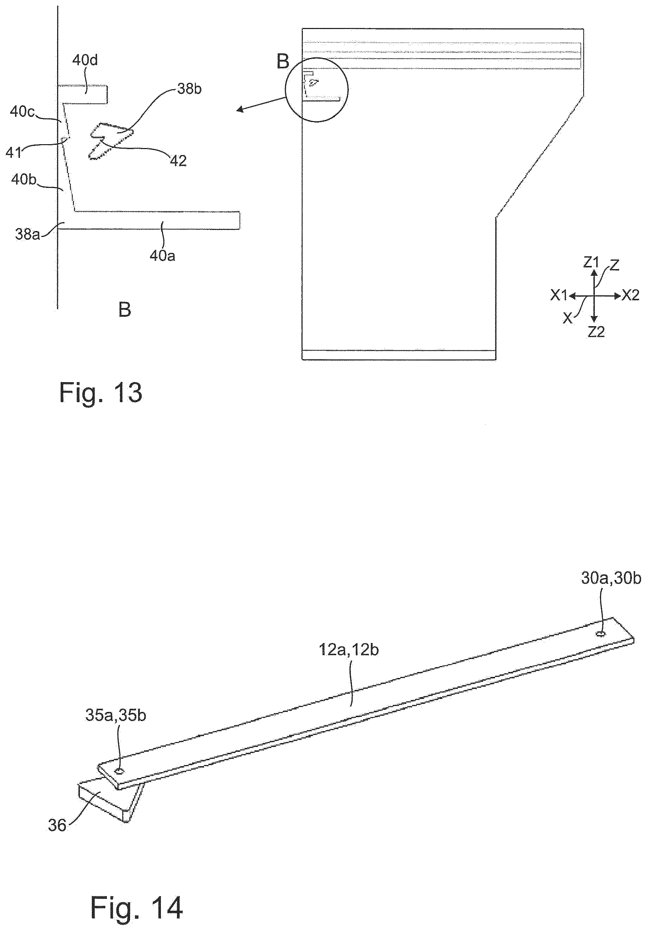

In den Figuren 13 bis 17 ist die Arretierungseinrichtung 11 im Detail dargestellt.

Die Figur 13 zeigt das Haltelement 13a, 13b, umfassend das äußere Kulissenelement 38a und das innere Kulissenelement 38b. Das äußere Kulissenelement 38a weist einen sich entlang der Längenachse X nach vorne (Richtung X1) erstreckenden ersten Abschnitt 40a auf, welcher bündig mit der Rückfläche 28a, 28b des U-Schenkelelements 14a, 14b abschließt, wobei sich ausgehend von diesem ersten Abschnitt 40a ein zweiter Abschnitt 40b nach oben (Richtung Z1) verjüngend entlang der Höhenachse Z erstreckt. Ferner erstreckt sich von diesem zweiten Abschnitt 40b ein dritter Abschnitt 40c nach oben (Richtung Z1) verjüngend entlang der Höhenachse Z, wobei der zweite Abschnitt 40b und der dritte Abschnitt 40c an ihrer Verbindungsstelle einen stufenförmigen Vorsprung 41 ausbilden. Ausgehend von dem dritten Abschnitt 40c erstreckt sich ein vierter Abschnitt 40d entlang der Längenachse X nach hinten (Richtung X2), wobei die Erstreckung des vierte Abschnitts 40d entlang der Längenachse X kürzer ist als die Erstreckung des ersten Abschnitts 40a entlang der Längenachse X.

Das innere Kulissenelement 38b ist in Bezug auf den zweiten Abschnitt 40b und den dritten Abschnitt 40c des äußeren Kulissenelements 38a entlang der Längenachse X nach hinten (Richtung X2) versetzt angeordnet. Weiterhin ist das innere Kulissenelement 38b entlang der Höhenachse Z zwischen dem ersten Abschnitt 40a und dem vierten Abschnitt 40d der äußeren Kulissenelements 38 angeordnet. Das innere Kulissenelement 38b ist im Wesentlichen polygon-förmig ausgebildet und weist eine dem zweiten 40b und dritten Abschnitt 40c zugewandte Aussparung 42 auf. Diese Aussparung 42 ist im Wesentlichen komplementär zu dem Rastelement 36 ausgebildet.

Außerdem erstreckt sich das erste Halteelement 13a ausgehend von der Innenfläche 16a des ersten U-Schenkelelements 14a entlang der Breitenachse Y in Richtung der Innenfläche 16b des zweiten U-Schenkelelements 16b. Das zweite Halteelement 13b erstreckt sich ausgehend von der Innenfläche 16b des zweiten U-Schenkelelements 14b entlang der Breitenachse Y in Richtung der Innenfläche 16a des ersten U-Schenkelelements 16a.

Die Figur 15 zeigt das Arretierelement 12a, 12b im Detail. Das Rastelement 36 greift in einem arretierenden Zustand in die Aussparung 42 des inneren Kulissenelements 38b des Halteelements 13a, 13b ein.

Die Figur 16 zeigt eine Schnittansicht des Aufnahmeelements 4 durch die Arretierungseinrichtung 11 entlang C-C (Längenachse X) mit Blick entlang der Höhenachse Z nach oben (Richtung Z1). Es sind zur besseren Übersicht die Anteile 2, 3 nicht dargestellt. Die Arretierungseinrichtung 11 befindet sich in einem arretierenden Zustand, wobei das Rastelement 36 in die Aussparung 42 des inneren Kulissenelements 38b eingreift. Die Erstreckung des Rastelements 36 entlang der Breitenrichtung Y entspricht im Wesentlichen der Erstreckung des inneren Kulissenelements 38b entlang der Breitenrichtung Y jeweils ausgehend von der Innenfläche 16a, 16b des U-Schenkelelements 14a, 14b. Die Erstreckung des äußeren Kulissenelements 38a entlang der Breitenrichtung ausgehend von der Innenfläche 16a, 16b des U-Schenkelelements 14a, 14b übersteigt die entsprechende Erstreckung des Rastelements 36 und des inneren Kulissenelements 38b.

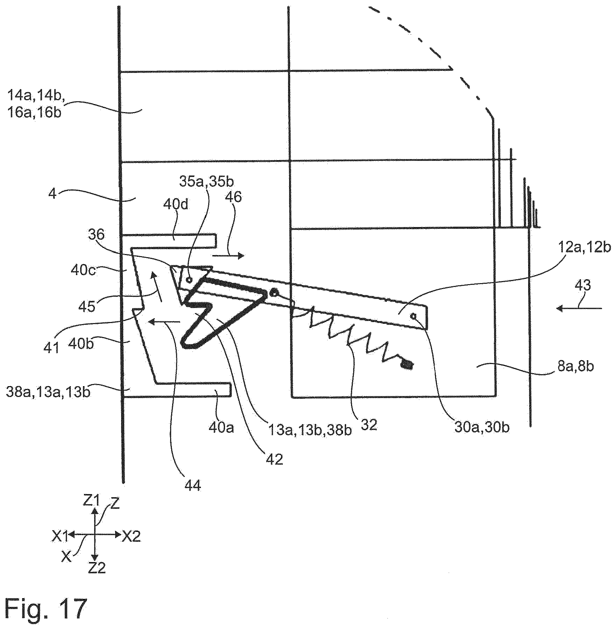

In der Figur 17 ist die Lockerung der Arretierung durch die Arretierungseinrichtung 11 gezeigt, wobei eine Bewegung der Elemente durch Pfeile 43-47 angedeutet ist.

Eine translatorische Verschiebung, beispielsweise ausgelöst durch einen Fahrzeugführer oder Beifahrer durch eine Kraftbeaufschlagung der Frontfläche 22, 23, des Anteils 2, 3 entlang der Pfeilrichtung 43 (entlang der Längenachse X nach vorne, Längenrichtung X1) verursacht eine translatorische Verschiebung des Arretierelements 12a, 12b entlang der Pfeilrichtung 44 entlang der Längenachse X in Längenrichtung X1 (nach vorne). Dadurch wird der Eingriff des Rastelements 36 in die Aussparung 42 des inneren Kulissenelementes 38b gelöst und das Arretierelement 12a, 12b wird über das Rastelement 36 durch den Abschnitt 40c des äußeren Kulissenelements 38a entlang der Pfeilrichtung 45 nach oben (Höhenrichtung Z1) geführt, wobei sich das schwenkbar um die Achse 35a, 35b gelagerte Rastelement 36 der Neigung des Abschnitts 40c und des polygon-förmigen inneren Kulissenelements 38b anpassen kann. Folglich ist das Arretierelements 12a, 12b entlang der Pfeilrichtung 46 in Längenrichtung X2 (nach hinten) in Bezug auf die Höhenachse Z über das innere Kulissenelement 38b hinwegbewegbar, was der ersten und der zweiten translatorische Bewegung des ersten Anteils 2 bzw. des zweiten Anteils 3 entspricht. Somit ist die erste und die translatorische Bewegung des ersten 2 und zweiten Anteils 3 freigegeben.

Um eine Arretierung des Anteils 2, 3 zu erreichen, erfolgt eine translatorische Verschiebung des Anteils 2, 3 in Pfeilrichtung 42 (Längenrichtung X1), wobei das Arretierelement 12a, 12b durch die Zugfeder 32, welche das Arretierelement 12a, 12b in Höhenrichtung Z2 (nach unten) um die Achse 35a, 35 verschwenkt, bis die Rotation durch den Vorsprung 33a, 33b begrenzt wird, bezogen auf die Höhenachse Z unterhalb des inneren Kulissenelements 38b, geführt durch den ersten Abschnitt 40a des äußeren Kulissenelements 38a, in der Längenrichtung X1 (nach vorne) an dem inneren Kulissenelement 38b vorbeigeführt wird. Ferner wird das Arretierelement 12a, 12b bzw. das Rastelement 36 durch den zweiten Abschnitt 40b des äußeren Kulissenelements 38a entlang der Höhenachse X nach oben (Höhenrichtung Z1) geführt, bis das Rastelement 36 kontaktierend zu dem stufenförmigen Vorsprung 41 angeordnet ist und die Bewegung in Höhenrichtung Z1 begrenzt wird, wobei das Rastelement 36 in die Aussparung 42 eingreifen kann.

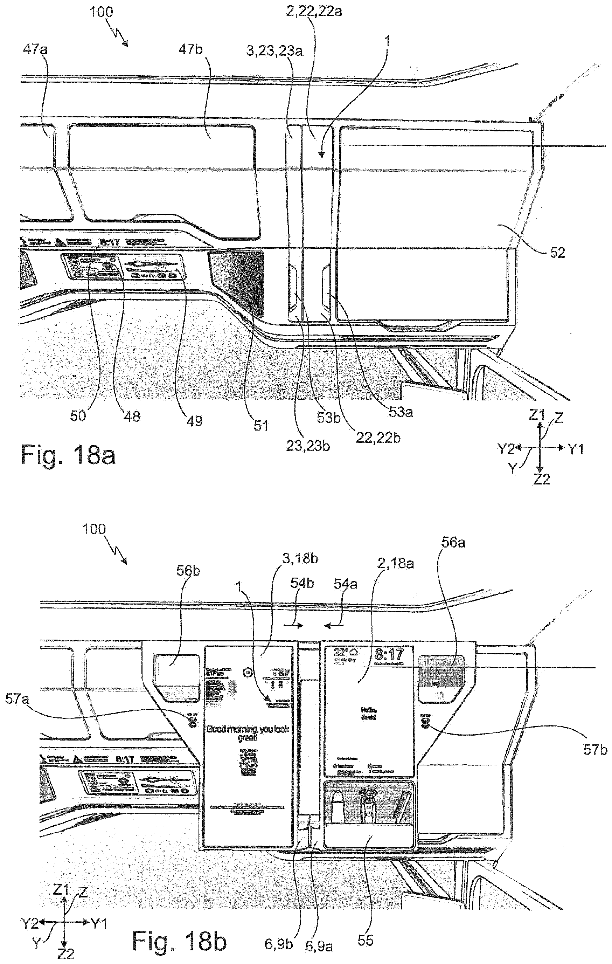

In den Figuren 18a und 18b ist ein Ausschnitt einer Nutzfahrzeugkabine innerhalb eines LKWs wiedergegeben. Dieser Ausschnitt zeigt den Bereich oberhalb der Windschutzscheibe, also zum Dach der Fahrzeugkabine hin in dem Innenraum. In diesem Bereich sind verschiedene Staufächer 47a, 47b angeordnet.

Gemäß der Figuren 18a und 18b sind der erste Anteil 2 und der zweite Anteil 3 bzw. die erste Nutzfläche 18a und die zweite Nutzfläche 18b als Bildschirm ausgebildet.

Auch sind verschiedene Anzeigeelemente 48 und Bedienungselemente 49 vorhanden. Ebenso ist eine Uhrzeit 50 angezeigt. Auch kann beispielsweise ein Lautsprecher 51 oder dergleichen in diesem Bereich angeordnet sein.

Ein weiteres Staufach 52 weist eine Klappe auf, die nach oben geklappt werden kann, um dahinter verstaute Materialien zugänglich zu machen.

Zwischen diesem Staufach 52 und dem Staufach 47b ist in einem relativ schmalen Bereich in einem eingeklappten und eingefahrenen Zustand ein Lastkraftwagenkabineneinrichtungsgegenstand 1 bzw. ein erster Anteil 2 und ein zweiter Anteil 3 angeordnet, welche mittels daran angeordneter Griffelemente 53a und 53b herausgezogen und aufgeklappt werden können. Die Griffelemente 53a, 53b sind bevorzugt an der Frontfläche 22, 23 des ersten 2 bzw. zweiten Anteils 3 angeordnet und weiter bevorzugt an dem unteren Abschnitt 22b, 23b oder dem oberen Abschnitt 22a, 23a der jeweiligen Frontfläche 22, 23. Dies ist in Fig. 18a gezeigt.

Die herausgezogenen Anteile 2, 3 im aufgeklappten Zustand sind in Fig. 18b wiedergegeben. Dieser Darstellung ist zu entnehmen, dass die beiden Anteile 2, 3 nach einem nach hinten gerichteten (Längenrichtung X2) Herausziehen durch die zweite Rotationsbewegung nach links (zweiter Anteil 3, Breitenrichtung Y2) und durch die erste Translationsbewegung nach rechts (erster Anteil 2, Breitenrichtung Y1) aufgeklappt werden können, sodass sie zwei Nutzflächen 18a, 18b bieten.

Diese beiden Anteile 2, 3 können auch zusammengeschoben werden, wie es durch die Pfeile 54a, 54b wiedergegeben ist, um so eine einheitliche Gesamtfläche zu bilden. Dabei wird der erste Anteil 3 entlang der Pfeilrichtung 54a in Breitenrichtung Y2 (nach links) und der zweite Anteil 2 entlang der Pfeilrichtung 54b in Breitenrichtung Y1 (nach rechts) translatorisch verschoben.

Die als Bildschirm ausgebildeten Anteile 2, 3 können nun verschiedene Bildwiedergaben praktizieren. Beispielsweise können diese als Fernsehapparat oder sonstiger Monitor dienen. Ebenso kann einer der Anteile 2, 3 in seinem unteren Bereich zusätzlich ein Aufbewahrungsfach 55 aufweisen.

Die beiden Anteile 2, 3 können mittels der Gelenkeinrichtung 6 bzw. den Scharnieren 9a, 9b nicht nur zur Seite hin verschwenkt werden, sondern sie können auch nach unten (Höhenrichtung Z2) verschwenkt werden, sodass eine bessere Draufsicht von Seiten des Fahrzeugführers bzw. Beifahrers auf den Bildschirm (erster Anteil 2 und zweiter Anteil 3) möglich ist. Dies wird durch eine schwenkbare Verbindung um eine Achse der Scharniere 9a, 9b mit dem jeweiligen Gleitelement 8a, 8b gewährleistet. Hierbei ist zu beachten, dass der Lastkraftwagenkabineneinrichtungsgegenstand 1 im oberen Bereich oberhalb der Windschutzscheibe angeordnet ist.

In den Bereichen 56a und 56b der ersten Nutzfläche 18a bzw. zweiten Nutzfläche 18b, die ebenso mit aufgeklappt werden, können beispielsweise Staufächer oder andere Dinge angeordnet sein.

Der erfindungsgemäße zweiteilige Lastkraftwageneinrichtungsgegenstand 1 ist derart ausgebildet, dass der zweite Anteil 2 eine geringere Breite bezogen auf die Erstreckung entlang der Breitenachse Y im zugeklappten Zustand aufweist als der erste Anteil 2. Dies geht aus Fig. 18a hervor. Grund hierfür ist, dass in dem ersten Anteil 2 mindestens ein bereits erwähntes Aufbewahrungsfach 55 angeordnet ist, welches dazu dienen kann, Zahnbürste und andere Hygieneartikel darin aufzubewahren. Hierdurch kann der LKW-Fahrer am Morgen nach dem Aufstehen den Lastkraftwagenkabineneinrichtungsgegenstand 1 dazu benutzen, Morgenhygiene zu betreiben. Beispielsweise kann dies Zähneputzen vor einem auf Spiegelmodus geschalteten Bildschirm sein.

Der Lastkraftwagenkabineneinrichtungsgegenstand 1 kann auch als Touchscreen ausgebildet sein, um so einzelne Funktionen zu bedienen. Beispielsweise kann auf der rechten Hälfte eine Uhrzeit oder Reiserouten angezeigt werden, wohingegen auf der linken Seite eine Website oder ein Fernsehfilm aufgerufen wird. Insbesondere für den Beifahrer kann somit der Lastkraftwagenkabineneinrichtungsgegenstand 1 vorteilhaft auch während der Fahrt benutzt werden.

Es ist auch denkbar, dass kurz vor dem Schlafen gehen der Lastkraftwagenkabineneinrichtungsgegenstand 1 als Fernseher für den auf dem Schlafplatz liegenden Fahrer fungiert.

Beide Anteile 2, 3 können im eingeklappten Zustand beispielsweise durch leichtes antippen in Längenrichtung X1 (Lösen der Arretierung durch die Arretierungseinrichtung 11) automatisch und federnd ausgefahren werden. Ein weiteres Aufklappen nach links (Breitenrichtung Y2) und rechts (Breitenrichtung Y1) kann ebenso automatisiert durch entsprechend ausgebildete federbeaufschlagte Scharniere 9a, 9b erfolgen. Alternativ kann dies von Hand gemacht werden. In diesem Fall sind die beiden Elemente 56a und 56b als Griffe ausbildbar.

Selbstverständlich sind auch weitere Funktionen und das Anzeigen dieser Funktionen, wie das Durchführen eines Telefonates für einen derartigen Lastkraftwagenkabineneinrichtungsgegenstand 1, denkbar. Außerdem können an den Anteilen 2, 3, bevorzugt den Nutzflächen 18a, 18b, Anschlusselemente 57a, 57b vorgesehen sein, wobei es sich beispielsweise um USB-Anschlüsse, Klinkenstecker, Steckdose oder dergleichen handeln kann, um ein Smartphone, Kopfhörer, Fön und ähnliches anzuschließen.

Aus Gründen der Übersicht können in den Figuren jeweils nur die relevanten Merkmale mit Bezugszeichen versehen sein.

Die Ausführungen und Beschreibungen zu Merkmalen/Elementen, welche in einer der Figuren gezeigt werden, sollen mutatis mutandis auch für das entsprechende Merkmal/Element gelten, falls es in einer anderen Figur gezeigt ist.

Die Ausführungen und Beschreibungen, die sich auf das Aufnahmeelement 4 beziehen, sollen mutatis mutandis auch für das erste 14a und das zweite U-Schenkelelement 14b und das U-Verbindungselement 15 gelten und umgekehrt.

### Bezugszeichenliste

- 100: Lastkraftwagenkabine
- 1: Lastkraftwagenkabineneinrichtungsgegenstand
- 2: erster Anteil
- 3: zweiter Anteil
- 4: Aufnahmeelement
- 5: Führungseinrichtung
- 6: Gelenkeinrichtung
- 7a: erstes Führungselement
- 7b: zweites Führungselement
- 8a: erstes Gleitelement
- 8b: zweites Gleitelement
- 9a: erstes Scharnier
- 9b: zweites Scharnier
- 10a: erste Drehachse
- 10b: zweite Drehachse
- 11: Arretierungseinrichtung
- 12: Arretierungsmittel
- 12a: erstes Arretierelement
- 12b: zweites Arretierelement
- 13: Haltemittel
- 13a: erstes Halteelement
- 13b: zweites Halteelement
- 14a: erstes U-Schenkelelement
- 14b: zweites U-Schenkelelement
- 15: U-Verbindungselement
- 16a: Innenfläche des ersten U-Schenkelelements
- 16b: Innenfläche des zweiten U-Schenkelelements
- 17: Innenfläche des U-Verbindungselements
- 18a: erste Nutzfläche
- 18b: zweite Nutzfläche
- 19a: erste Außenfläche
- 19b: zweite Außenfläche
- 20a: obere Fläche des ersten U-Schenkelelements
- 20b: obere Fläche des zweiten U-Schenkelelements
- 21a: obere Fläche des ersten Anteils
- 21b: obere Fläche des zweiten Anteils
- 22: Frontfläche des ersten Anteils
- 22a: oberer Abschnitt der Frontfläche des ersten Anteils
- 22b: unterer Abschnitt der Frontfläche des ersten Anteils
- 22c: Verbindungsabschnitt der Frontfläche des ersten Anteils
- 23: Frontfläche des zweiten Anteils
- 23a: oberer Abschnitt der Frontfläche des zweiten Anteils
- 23b: unterer Abschnitt der Frontfläche des zweiten Anteils
- 23c: Verbindungsabschnitt der Frontfläche des zweiten Anteils
- 24: Frontfläche des ersten U-Schenkelelements
- 24a: oberer Abschnitt der Frontfläche des ersten U-Schenkelelements
- 24b: unterer Abschnitt der Frontfläche des ersten U-Schenkelelements
- 24c: Verbindungsabschnitt der Frontfläche des ersten U-Schenkelelements
- 25: Frontfläche des zweiten U-Schenkelelements
- 25a: oberer Abschnitt der Frontfläche des zweiten U-Schenkelelements
- 25b: unterer Abschnitt der Frontfläche des zweiten U-Schenkelelements
- 25c: Verbindungsabschnitt der Frontfläche des zweiten U-Schenkelelements
- 26: Rückfläche des ersten Anteils
- 27: Rückfläche des zweiten Anteils
- 28a: Rückfläche des ersten U-Schenkelelements
- 28b: Rückfläche des zweiten U-Schenkelelements
- 29a: erstes Begrenzungselement
- 29b: zweites Begrenzungselement
- 30a: dritte Achse
- 30b: vierte Achse
- 31a-c: plattenförmige Elemente
- 32: Zugfeder
- 33a, b: Vorsprung
- 34: Rotationsrichtung
- 35a: fünfte Achse
- 35b: sechste Achse
- 36: Rastelement
- 37: Drehfeder
- 38a: äußeres Kulissenelement
- 38b: inneres Kulissenelement
- 39a: Führungsabschnitt
- 39b: Befestigungsabschnitt
- 39c: Steg
- 40a-d: erster bis vierter Abschnitt
- 41: stufenförmiger Vorsprung
- 42: Aussparung
- 43: Pfeil
- 44: Pfeil
- 45: Pfeil
- 46: Pfeil
- 47a, b: Staufächer
- 48: Anzeigeelement
- 49: Bedienungselement
- 50: Uhrzeit
- 51: Lautsprecher
- 52: klappbares Staufach
- 53a, b: Griffelement
- 54a, b: Pfeil
- 55: Aufbewahrungsfach
- 56a, b: Bereich
- 57a, b: Anschlusselemente

## Patentansprüche

1. Lastkraftwagenkabineneinrichtungsgegenstand (1), welcher in einen Innenraum, insbesondere einen Armaturenbereich oder einen Bereich oberhalb der Windschutzscheibe, der Lastkraftwagenkabine (100) integriert und fest in diesen eingebaut ist, bestehend aus einem Aufnahmeelement (4) und einem damit durch eine Führungseinrichtung (5) und eine Gelenkeinrichtung (6) verbundenen ersten Anteil (2) und zweiten Anteil (3), wobei der erste Anteil (2) und der zweite Anteil (3) mittels der Führungseinrichtung (5) und der Gelenkeinrichtung (6) flügelartig entlang einer Längenachse (X) der Lastkraftwagenkabine (100) auf- und zuklappbar sind,
**dadurch gekennzeichnet, dass**
der erste Anteil (2) und der zweite Anteil (3) bezogen auf eine jeweilige Haupterstreckungsebene in einem zugeklappten Zustand im Wesentlichen parallel zu der Längenachse (X) der Lastkraftwagenkabine (100) und in einem aufgeklappten Zustand im Wesentlichen senkrecht zu der Längenachse (X) der Lastkraftwagenkabine (100) angeordnet sind,
wobei die Führungseinrichtung (5) ein erstes Führungselement (7a) zum Durchführen einer ersten Translationsbewegung des ersten Anteils (2) relativ zu dem Aufnahmeelement (4) entlang der Längenachse (X) der Lastkraftwagenkabine (100), ein zweites Führungselement (7b) zum Durchführen einer zweiten Translationsbewegung des zweiten Anteils (3) relativ zu dem Aufnahmeelement (4) entlang der Längenachse (X) der Lastkraftwagenkabine (100), ein mit dem ersten Führungselement (7a) wechselwirkendes erstes Gleitelement (8a) und ein mit dem zweiten Führungselement (7b) wechselwirkendes zweites Gleitelement (8b) aufweist.

2. Lastkraftwagenkabineneinrichtungsgegenstand (1) nach Anspruch 1,
**dadurch gekennzeichnet, dass**
das erste (7a) und das zweite Führungselement (7b) länglich ausgestaltet sind und sich im Wesentlichen parallel zueinander entlang der Längenachse (X) der Lastkraftwagenkabine (100) an dem Aufnahmeelement (4) erstrecken.

3. Lastkraftwagenkabineneinrichtungsgegenstand (1) nach Anspruch 1 oder 2,
**dadurch gekennzeichnet, dass**
das erste Gleitelement (8a) fest mit dem ersten Anteil (2) und das zweite Gleitelement (8b) fest mit dem zweiten Anteil (3) verbunden ist, wobei das erste Gleitelement (8a) zumindest teilweise innerhalb des ersten Führungselements (7a) und das zweite Gleitelement (8b) zumindest teilweise innerhalb des zweiten Führungselements (7b) angeordnet ist und wobei das erste Gleitelement (8a) entlang des ersten Führungselements (7a) und das zweite Gleitelement (8b) entlang des zweiten Führungselements (7b) entlang der Längenachse (X) der Lastkraftwagenkabine (100) bewegbar ist.

4. Lastkraftwagenkabineneinrichtungsgegenstand (1) nach einem der vorangegangenen Ansprüche,
**dadurch gekennzeichnet, dass**
die Gelenkeinrichtung (6) ein fest mit dem ersten Anteil (2) verbundenes erstes Scharnier (9a) zum Durchführen einer ersten Rotationsbewegung des ersten Anteils (2) relativ zu dem Aufnahmeelement (4) und ein fest mit dem zweiten Anteil (3) verbundenes zweites Scharnier (9b) zum Durchführen einer zweiten Rotationsbewegung des zweiten Anteils (3) relativ zu dem Aufnahmeelement (4) aufweist.

5. Lastkraftwagenkabineneinrichtungsgegenstand (1) nach Anspruch 4,
**dadurch gekennzeichnet, dass**
das erste Scharnier (9a) fest mit dem ersten Gleitelement (8a) und das zweite Scharnier (9b) fest mit dem zweiten Gleitelement (8b) verbunden ist.

6. Lastkraftwagenkabineneinrichtungsgegenstand (1) nach Anspruch 4 oder 5,
**dadurch gekennzeichnet, dass**
das erste Scharnier (9a) eine erste Drehachse (10a) und das zweite Scharnier (9b) eine zweite Drehachse (10b) aufweist, wobei die erste (10a) und die zweite Drehachse (10b) im Wesentlichen senkrecht zu der Längenachse (X) der Lastkraftwagenkabine (100) angeordnet sind.

7. Lastkraftwagenkabineneinrichtungsgegenstand (1) nach einem der vorangegangenen Ansprüche,
**dadurch gekennzeichnet, dass**
der erste Anteil (2) und der zweite Anteil (3) in dem eingeklappten Zustand zumindest teilweise innerhalb des Aufnahmeelements (4) und in dem ausgeklappten Zustand vollständig außerhalb des Aufnahmeelements (4) angeordnet sind.

8. Lastkraftwagenkabineneinrichtungsgegenstand (1) nach einem der vorangegangenen Ansprüche,
**dadurch gekennzeichnet, dass**
der Lastkraftwagenkabineneinrichtungsgegenstand (1) eine, ein Arretierungsmittel (12) und ein Haltemittel (13) umfassende, Arretierungseinrichtung (11) aufweist, wobei das Arretierungsmittel (12) ein mittels einer dritten Achse (30a) schwenkbar mit dem ersten Gleitelement (8a) verbundenes erstes Arretierelement (12a) und ein mittels einer vierten Achse (30b) schwenkbar mit dem zweiten Gleitelement (8b) verbundenes zweites Arretierelement 12b) umfasst und wobei das Haltemittel (13) ein fest mit dem Aufnahmeelement (4) verbundenes erstes Halteelement (13a) und zweites Halteelement (13b) umfasst.

9. Lastkraftwagenkabineneinrichtungsgegenstand (1) nach Anspruch 8,
**dadurch gekennzeichnet, dass**
die erste Translationsbewegung durch ein Eingreifen des ersten Arretierelements (12a) in das erste Halteelement (13a) und die zweite Translationsbewegung durch ein Eingreifen des zweiten Arretierelements (12b) in das zweite Halteelement (13b) arretierbar sind.

## Claims

1. Lorry cab equipment piece (1) that is integrated into an interior, in particular a dashboard area or an area above the windshield, of the lorry cab (100) and permanently installed therein, consisting of a receiving element (4) and a first part (2) and a second part (3) connected thereto by a guide device (5) and a hinge device (6), wherein the first part (2) and the second part (3) are extendable and retractable in a wing-like manner along a longitudinal axis (X) of the lorry cab (100) by means of the guide device (5) and the hinge device (6),
**characterised in that**
the first part (2) and the second part (3) are arranged relative to a respective main extension plane substantially parallel to the longitudinal axis (X) of the lorry cab (100) in a retracted state and substantially perpendicular to the longitudinal axis (X) of the lorry cab (100) in an extended state,
wherein the guide device (5) comprises a first guide element (7a) for performing a first translational movement of the first part (2) relative to the receiving element (4) along the longitudinal axis (X) of the lorry cab (100), a second guide element (7b) for performing a second translational movement of the second part (3) relative to the receiving element (4) along the longitudinal axis (X) of the lorry cab (100), a first sliding element (8a) interacting with the first guide element (7a), and a second sliding element (8b) interacting with the second guide element (7b).

2. Lorry cab equipment piece (1) according to claim 1,
**characterised in that**
the first (7a) and the second guide element (7b) are elongated and extend substantially parallel to each other along the longitudinal axis (X) of the lorry cab (100) at the receiving element (4).

3. Lorry cab equipment piece according to claim 1 or 2,
**characterised in that**
the first sliding element (8a) is fixedly connected to the first part (2) and the second sliding element (8b) is fixedly connected to the second part (3), wherein the first sliding element (8a) is at least partially arranged within the first guide element (7a) and the second sliding element (8b) is at least partially arranged within the second guide element (7b), and wherein the first sliding element (8a) is movable along the first guide element (7a) and the second sliding element (8b) is movable along the second guide element (7b) along the longitudinal axis (X) of the lorry cab (100).

4. Lorry cab equipment piece (1) according to one of the preceding claims,
**characterised in that**
the hinge device (6) comprises a first hinge (9a) fixedly connected to the first part (2) for performing a first rotational movement of the first part (2) relative to the receiving element (4) and a second hinge (9b) fixedly connected to the second part (3) for performing a second rotational movement of the second part (3) relative to the receiving element (4).

5. Lorry cab equipment piece (1) according to claim 4,
**characterised in that**
the first hinge (9a) is fixedly connected to the first sliding element (8a), and the second hinge (9b) is fixedly connected to the second sliding element (8b).

6. Lorry cab equipment piece (1) according to claim 4 or 5,
**characterised in that**
the first hinge (9a) has a first axis of rotation (10a), and the second hinge (9b) has a second axis of rotation (10b), wherein the first (10a) and the second axes of rotation (10b) are arranged substantially perpendicular to the longitudinal axis (X) of the lorry cab (100).

7. Lorry cab equipment piece (1) according to any of the preceding claims,
**characterised in that**
the first part (2) and the second part (3) are arranged at least partially within the receiving element (4) in the retracted state and completely outside the receiving element (4) in the extended state.

8. Lorry cab equipment piece (1) according to any of the preceding claims,
**characterised in that**
the lorry cab equipment piece (1) comprises a locking device (11) comprising a locking means (12) and a retaining means (13), wherein the locking means (12) comprises a first locking element (12a) rotatably connected to the first sliding element (8a) by means of a third pivot (30a) and a second locking element (12b) rotatably connected to the second sliding element (8b) by means of a fourth pivot (30b), and wherein the retaining means (13) comprises a first retaining element (13a) and a second retaining element (13b) fixedly connected to the receiving element (4).

9. Lorry cab equipment piece (1) according to claim 8,
**characterised in that**
the first translational movement is lockable by engaging the first locking element (12a) in the first retaining element (13a), and the second translational movement is lockable by engaging the second locking element (12b) in the second retaining element (13b).

## Revendications

1. Meuble de cabine de camion (1), lequel est intégré dans un habitacle, en particulier une région de tableau de bord ou une région au-dessus du pare-brise, de la cabine de camion (100) et est installé dans celui-ci de façon fixe, constitué d'un élément de réception (4) et d'une première partie (2) et d'une seconde partie (3) reliées avec celui-ci par un dispositif de guidage (5) et un dispositif d'articulation (6), la première partie (2) et la seconde partie (3) étant aptes à être dépliées et repliées de façon similaire à une aile le long d'un axe longitudinal (X) de la cabine de camion (100) au moyen du dispositif de guidage (5) et du dispositif d'articulation (6),
**caractérisé par le fait que**
la première partie (2) et la seconde partie (3) sont disposées par rapport à un plan d'extension principal respectif sensiblement parallèlement à l'axe longitudinal (X) de la cabine de camion (100) dans un état replié et sensiblement perpendiculairement à l'axe longitudinal (X) de la cabine de camion (100) dans un état déplié,
dans lequel le dispositif de guidage (5) comporte un premier élément de guidage (7a) pour la réalisation d'un premier mouvement de translation de la première partie (2) par rapport à l'élément de réception (4) le long de l'axe longitudinal (X) de la cabine de camion (100), un deuxième élément de guidage (7b) pour la réalisation d'un second mouvement de translation de la seconde partie (3) par rapport à l'élément de réception (4) le long de l'axe longitudinal (X) de la cabine de camion (100), un premier élément de glissement (8a) interagissant avec le premier élément de guidage (7a) et un second élément de glissement (8b) interagissant avec le second élément de guidage (7b).

2. Meuble de cabine de camion (1) selon la revendication 1,
**caractérisé par le fait que**
le premier (7a) et le second (7b) élément de guidage sont réalisés allongés et s'étendent sensiblement parallèlement entre eux le long de l'axe longitudinal (X) de la cabine de camion (100) sur l'élément de réception (4).

3. Meuble de cabine de camion (1) selon l'une des revendications 1 ou 2,
**caractérisé par le fait que**
le premier élément de glissement (8a) est relié de façon fixe avec la première partie (2) et le second élément de glissement (8b) est relié de façon fixe avec la seconde partie (3), le premier élément de glissement (8a) étant disposé au moins partiellement à l'intérieur du premier élément de guidage (7a) et le second élément de glissement (8b) étant disposé au moins partiellement à l'intérieur du second élément de guidage (7b), et le premier élément de glissement (8a) étant déplaçable le long du premier élément de guidage (7a) et le second élément de glissement (8b) étant déplaçable le long du second élément de guidage (7b) le long de l'axe longitudinal (X) de la cabine de camion (100).

4. Meuble de cabine de camion (1) selon l'une des revendications précédentes,
**caractérisé par le fait que**
le dispositif d'articulation (6) présente une première charnière (9a) reliée de façon fixe avec la première partie (2) pour la réalisation d'un premier mouvement de rotation de la première partie (2) par rapport à l'élément de réception (4) et une seconde charnière (9b) reliée de façon fixe avec la seconde partie (3) pour la réalisation d'un second mouvement de rotation de la seconde partie (3) par rapport à l'élément de réception (4).

5. Meuble de cabine de camion (1) selon la revendication 4,
**caractérisé par le fait que**
la première charnière (9a) est reliée de façon fixe avec le premier élément de glissement (8a) et la seconde charnière (9b) est reliée de façon fixe avec le second élément de glissement (8b).

6. Meuble de cabine de camion (1) selon l'une des revendications 4 ou 5,
**caractérisé par le fait que**
la première charnière (9a) présente un premier axe de rotation (10a) et la seconde charnière (9b) présente un second axe de rotation (10b), le premier (10a) et le second (10b) axe de rotation étant disposés sensiblement perpendiculairement à l'axe longitudinal (X) de la cabine de camion (100).

7. Meuble de cabine de camion (1) selon l'une des revendications précédentes,
**caractérisé par le fait que**
la première partie (2) et la seconde partie (3) sont disposées au moins partiellement à l'intérieur de l'élément de réception (4) dans l'état rentré et complètement à l'extérieur de l'élément de réception (4) dans l'état déplié.

8. Meuble de cabine de camion (1) selon l'une des revendications précédentes,
**caractérisé par le fait que**
le meuble de cabine de camion (1) présente un dispositif de blocage (11) comportant un moyen de blocage (12) et un moyen de maintien (13), le moyen de blocage (12) comportant un premier élément de blocage (12a) relié avec le premier élément de glissement (8a) en étant apte à pivoter au moyen d'un troisième axe (30a) et un second élément de blocage (12b) relié avec le second élément de glissement (8b) en étant apte à pivoter au moyen d'un quatrième axe (30b), et le moyen de maintien (13) comportant un premier élément de maintien (13a) et un second élément de maintien (13b) reliés de manière fixe avec l'élément de réception (4).

9. Meuble de cabine de camion (1) selon la revendication 8,
**caractérisé par le fait que**
le premier mouvement de translation est apte à être bloqué par un engagement du premier élément de blocage (12a) dans le premier élément de maintien (13a) et le second mouvement de translation est apte à être bloqué par l'engagement du second élément de blocage (12b) dans le second élément de maintien (13b).
